# EUROPÄISCHE PATENTSCHRIFT

(11) **EP 4 194 143 B1**
(45) Veröffentlichungstag und Bekanntmachung des Hinweises auf die Patenterteilung: **09.07.2025**
(21) Anmeldenummer: 23152789.6
(22) Anmeldetag: 26.04.2013
(51) Int. Cl.: B23Q 1/44, B23Q 3/06, B24B 9/14, B24B 41/04, B24B 41/06, B24B 47/14, G02B 27/62, B24B 13/005, B24B 55/02

(54) **ZENTRIERMASCHINE FÜR WERKSTÜCKE, NAMENTLICH OPTISCHE LINSEN MIT GEKRÜMMTEN OPTISCHEN FLÄCHEN**
CENTERING MACHINE FOR WORKPIECES, NAMELY OPTICAL LENSES WITH CURVED OPTICAL SURFACES
MACHINE DE CENTRAGE POUR PIÈCES, À SAVOIR DES LENTILLES OPTIQUES AVEC DES SURFACES OPTIQUES COURBES

(30) Priorität: 22.05.2012 DE 102012010005
(43) Veröffentlichungstag der Anmeldung: 14.06.2023
(62) Teilanmeldung aus: 13002206.4
(73) Patentinhaber: Satisloh AG, 6340 Baar (CH)
(72) Erfinder: Diehl, Joachim, 35398 Gießen (DE); Moos, Steffen, 35435 Wettenberg (DE); Schmidt, Achim, 35633 Lahnau (DE)
(74) Vertreter: Oppermann, Mark

(56) Entgegenhaltungen:
- EP-A2- 0 323 572
- DE-A1- 2 906 404
- DE-B1- 2 940 901

## Beschreibung

### TECHNISCHES GEBIET

Die vorliegende Erfindung bezieht sich allgemein auf eine Zentriermaschine für Werkstücke aus den Anwendungsgebieten Feinoptik, Uhrenindustrie und Halbleiterindustrie, wo Werkstücke zunächst zentriert zu spannen und in der Folge am Rand zu bearbeiten und/oder abzutasten sind. Namentlich bezieht sich die Erfindung auf eine Zentriermaschine für optische Linsen mit gekrümmten optischen Flächen, bei der eine Linse für ihre Randbearbeitung im sogenannten "Glockenspannverfahren" oder "-prozess" zentriert gespannt wird.

### STAND DER TECHNIK

Linsen für Objektive od.dgl. werden nach der Bearbeitung der optischen Flächen "zentriert", damit die optische Achse, deren Lage durch eine Gerade gekennzeichnet ist, welche durch die beiden Krümmungsmittelpunkte der optischen Flächen hindurch verläuft, auch durch die geometrische Mitte der Linse geht. Die Linse wird zu diesem Zweck zunächst zwischen zwei fluchtenden Zentrierspindeln derart ausgerichtet und gespannt, dass die beiden Krümmungsmittelpunkte der Linse mit der gemeinsamen Rotationsachse der Zentrierspindeln zusammenfallen. In der Folge wird der Rand der Linse in einer definierten Beziehung zur optischen Achse der Linse bearbeitet, wie es später für den Einbau der Linse in einer Fassung notwendig ist. Dabei wird dem Rand je nach Werkstoff der Linse (Glas oder Kunststoff) durch spanende Bearbeitung mit geometrisch unbestimmten oder bestimmten Schneiden eine definierte Geometrie sowohl in der Draufsicht auf die Linse - Umfangskontur der Linse - als auch im Radialschnitt gesehen - Kontur des Rands, etwa geradlinige Ausbildung oder Ausbildung mit Stufe(n)/Facette(n) - gegeben.

Unter dem eingangs erwähnten "Glockenspannprozess" versteht man in diesem Zusammenhang einen Ausricht- und Spannvorgang, bei welchem sich die Linse mit ihrer optischen Achse zwischen an den Zentrierspindeln vorgesehenen topfförmigen Spannglocken automatisch bezüglich der beispielsweise vertikal verlaufenden Rotationsachse der Zentrierspindeln ausrichtet bevor sie gespannt wird. Hierzu wird bei z.B. vertikaler Anordnung der Zentrierspindeln die Linse auf die Spannglocke der unteren Zentrierspindel aufgelegt, worauf die Spannglocke der oberen Zentrierspindel in axialer Richtung relativ zur unteren Spannglocke verfahren wird - entweder durch Absenken der oberen Zentrierspindel oder Anheben der unteren Zentrierspindel - bis auch die obere Spannglocke mit leichtem Druck an der Linse anliegt (Antastphase). Die Linse verschiebt sich nun infolge der Krümmung ihrer optischen Flächen ggf. unter Zugabe eines geeigneten Gleitmittels und/oder Rotation der Zentrierspindeln selbsttätig in Querrichtung, wobei die Spannglocken weiter zusammenfahren (Ausrichtphase). Die Querbewegung der Linse relativ zu den Spannglocken sowie die axiale Relativbewegung der Spannglocken endet wenn die Linse zwischen den Spannglocken eine Lage eingenommen hat, die den unter den gegebenen geometrischen Verhältnissen minimalen Abstand der Spannglocken ermöglicht. Die dann mit ihrer optischen Achse bezüglich der Rotationsachse der Zentrierspindeln ausgerichtete Linse wird nunmehr zwischen den Spannglocken durch Erhöhen der Spannkraft festgespannt (Spannphase) und kann sodann am Rand bearbeitet werden. Während die Spann- oder Zentrierglocken - manchmal auch als "Spann- oder Zentrierdorne" bezeichnet - für die Optikfertigung genormt sind (auf die deutsche Norm DIN 58736-3 aus dem Juli 2001 wird diesbezüglich ausdrücklich verwiesen), sind für dieses Vorgehen angepasste Zentriermaschinen z.B. aus den Druckschriften DE-A-37 44 118 (entsprechend der Druckschrift EP-A-0 323 572) und DE-A-100 08 710 bekannt.

Die in der nächstliegenden Druckschrift DE-A-37 44 118 offenbarte Zentriermaschine besitzt zwei übereinander angeordnete Zentrierspindeln, deren über einseitig angreifende Riementriebe drehend antreibbare Zentrierspindelwellen bezüglich einer Zentrierachse axial fluchten und an den einander zugewandten Enden jeweils zur Aufnahme einer Spannglocke ausgebildet sind. Bei diesem Stand der Technik ist die obere Zentrierspindel als axial feste Spindel ausgeführt (Festspindel), während die untere Zentrierspindel bezüglich der oberen Zentrierspindel axial beweg- und spannbar ist (Spannspindel). Zur Erzeugung dieser Axialbewegungen und -kräfte ist eine Druckmitteleinrichtung vorgesehen, die ein unterhalb der Spannspindel angeordnetes plattenförmiges Joch aufweist, in dem zentrisch zur Spannspindel eine Membrankolbenzylindereinheit angeordnet ist, welche auf das untere Ende der Spannspindel wirkt, und an dem zu beiden Seiten der Zentrierachse jeweils ein doppeltwirkender Druckzylinder mit einem Kurzhub- und einem Langhubkolben befestigt ist. Während hier die Druckzylinder bei gleichzeitiger Druckbeaufschlagung der Kurzhub- und Langhubkolben bis zur Anlage der Langhubkolben an den Kurzhubkolben den Hub erzeugen, der benötigt wird, um die Spannglocken bis auf einen geringen Spalt zwischen der oberen Spannglocke und der auf der unteren Spannglocke aufliegenden Linse zusammenzufahren, dient die Membrankolbenzylindereinheit als (Fein)Hubeinrichtung für den Ausrichtvorgang der Linse, mittels der die benötigte Kraft für das Ausrichten der Linse einstellbar ist. Die zur Bearbeitung der Linse benötigte Spannkraft, welche die zum Ausrichten der Linse mittels des Membrankolbens erzeugte Kraft um ein Vielfaches übersteigt, wird sodann nach Abschalten des auf die Kurzhubkolben wirkenden Drucks alleine über die Langhubkolben erzeugt, wobei sich der Membrankolben auf das Joch aufsetzt, so dass die Spannkraft der Langhubkolben voll auf die Spannspindel wirkt.

Dieser Stand der Technik ist im Hinblick auf einen möglichst optimal verlaufenden Glockenspannprozess allerdings in mehrfacher Hinsicht verbesserungsbedürftig: So besteht bei der vorgesehenen Parallelanordnung der doppeltwirkenden Druckzylinder neben der im Verhältnis hohen inneren Reibung die Gefahr eines "Verkantens" der Langhubkolben, auch infolge der von Kolben zu Kolben unterschiedlich auftretenden Stick-Slip-Effekte. Ferner besitzt der Membrankolben eine gewisse Eigensteife, weshalb die für das Ausrichten der Linse benötigte Kraft nicht sehr feinfühlig einstellbar ist. Darüber hinaus kommt es - insbesondere wenn die Zentrierspindelwellen während des Glockenspannprozesses ggf. drehend angetrieben werden - zu einer Querkrafteinleitung an den Zentrierspindeln, die eine gewisse Biegung und/oder Querverlagerung der Zentrierspindelwellen im Lagerspiel bewirken kann. Dies alles kann zu sogenannten "Abdrücken" der Spannglocken auf den optischen Flächen der zu spannenden Werkstücke und anderen Oberflächenbeschädigungen hieran führen, die es natürlich zu vermeiden gilt.

Aus der Druckschrift DE-A-100 08 710 ist eine Zentriermaschine bekannt, bei der ein verschwenkbarer Kipphebel vorgesehen ist, an dessen einem Ende die axial bewegbare Zentrierspindel und an dessen anderem Ende ein Ausgleichsgewicht angelenkt ist, um an dem Kipphebel ein Moment zu erzeugen, welches dem durch die axial bewegbare Zentrierspindel erzeugten Moment entgegenwirkt. An dem Ende des Kipphebels, an dem das Ausgleichsgewicht angelenkt ist, greift eine kombinierte Hub- und Spanneinrichtung an, die neben einem Federmechanismus einen mittels eines Elektromotors antreibbaren Kugelgewindetrieb aufweist, der dazu dient, die eine Zentrierspindel relativ zu der anderen Zentrierspindel CNC-gesteuert in axialer Richtung zu bewegen, um das Werkstück zwischen den Spannglocken auszurichten (Antast- und Ausrichtphasen) als auch - über den Federmechanismus - einzuspannen (Spannphase). Auch bei diesem Stand der Technik ist eine Bearbeitungseinheit zur Randbearbeitung des einmal gespannten Werkstücks vorgesehen, die jedoch nicht näher beschrieben wird.

Wenngleich der aus Kipphebel und Ausgleichsgewicht bestehende Mechanismus bei diesem Stand der Technik eine feinfühlige Antast- bzw. Spannbewegung der axial bewegbaren Zentrierspindel in Richtung des zu spannenden Werkstücks mit sehr geringen und auch gut dosierbaren Kräften gestattet, bestehen hier Nachteile dahingehend, dass über den Kipphebel wiederum eine gewisse Querkraft in die Spannspindel eingeleitet wird, zu einem Wärmegang in radialer Richtung, was in Summe die Achsflucht der Zentrierspindelwellen beeinträchtigen kann. Entsprechendes gilt im Hinblick auf den Drehantrieb der Zentrierspindelwellen, der hier über einseitig angreifende Zahnradpaarungen bewirkt wird.

Des Weiteren offenbart die Druckschrift DE-A-29 40 901 eine Randschleifmaschine (sogenannter "Edger") für Brillengläser, bei der ein Brillenglas mittels "Haltemitteln" zwischen zwei Halbwellen gehalten ist. Von diesen Halbwellen ist die erste Halbwelle drehend angetrieben und nicht längs verstellbar und die zweite Halbwelle drehbar und längs verstellbar, aber nicht angetrieben. Darüber hinaus ist die zweite Halbwelle über eine Kolbenstange mit einem Zylinder-Kolben-Aggregat verbunden, so dass die zweite Halbwelle infolge einer Verschiebung der aus dem Zylinder-Kolben-Aggregat herausragenden Kolbenstange mitgenommen werden kann. Das Zylinder-Kolben-Aggregat weist zwei koaxial angeordnete (Tandemanordnung) und mittels einer weiteren Kolbenstange miteinander verbundene Kolben mit verschiedenen Wirkflächen auf, die beide auf die Kolbenstange wirken. Somit kann die zweite Halbwelle über die Kolbenstange mit zwei unterschiedlichen Kräften zum Verschieben der zweiten Halbwelle bzw. zum Halten des Brillenglases während des Schleifprozesses beaufschlagt werden. Hierdurch soll mit einer einfach aufgebauten Vorrichtung beim Verschieben der zweiten Halbwelle die Gefahr einer Beschädigung des Brillenglases oder der Verletzung der Bedienperson beseitigt werden. Für das eingangs beschriebene "Glockenspannverfahren" zum Zentrieren von Linsen in der Feinoptik wesentliche Merkmale, wie z.B. zwei Spannglocken oder zwei drehend antreibbare Zentrierspindeln, gibt dieser Stand der Technik indes nicht her.

Für Bewegungsaufgaben, die sowohl drehende als auch hin- und hergehende Bewegungen umfassen, ist schließlich aus der Druckschrift DE-A-29 06 404 ein aus Stator- und Läuferteilen nebst Lagerstellen bestehender Elektromotor bekannt. Eine Besonderheit dieses Elektromotors besteht darin, dass auf einer gemeinsamen Welle hintereinander sowohl der Anker eines Drehfeldmotors als auch der Anker eines Linearmotors angeordnet sind, denen einerseits der Stator eines Drehfeldmotors und andererseits der Linearkamm eines Linearmotors zugeordnet ist. Irgendein Bezug zu optischen Zentriermaschinen ist diesem Stand der Technik nicht zu entnehmen.

### AUFGABENSTELLUNG

Der Erfindung liegt die Aufgabe zugrunde, eine Zentriermaschine für Werkstücke, namentlich für optische Linsen mit gekrümmten optischen Flächen derart auszugestalten, dass die oben zum Stand der Technik angesprochenen Probleme adressiert werden. Insbesondere soll die Zentriermaschine einen optimierten Glockenspannprozess ermöglichen, bei dem sogenannte "Abdrücke" und andere Oberflächenbeschädigungen an den zumeist empfindlichen Flächen der zu spannenden und zu bearbeitenden Werkstücke durch die üblicherweise sehr harten und scharfkantigen Auflagebereiche der Zentrier- bzw. Spannglocken zuverlässig vermieden werden.

### DARSTELLUNG DER ERFINDUNG

Diese Aufgabe wird durch die im Patentanspruch 1 angegebenen Merkmale gelöst. Vorteilhafte oder zweckmäßige Weiterbildungen der Erfindung sind Gegenstand der Patentansprüche 2 bis 13.

Gemäß der Erfindung umfasst eine Zentriermaschine für Werkstücke, namentlich optische Linsen mit gekrümmten optischen Flächen, zwei Zentrierspindeln, deren jeweils drehend angetriebene, in Zentrierspindelgehäusen aufgenommene Zentrierspindelwellen bezüglich einer Zentrierachse axial fluchten und an den einander zugewandten Spannglockenenden jeweils eine topfförmige Spannglocke aufnehmen, eine Hubeinrichtung, mittels der eine der Zentrierspindelwellen bezüglich der anderen der Zentrierspindelwellen entlang der Zentrierachse feinfühlig axial zustellbar ist, um eines der Werkstücke zwischen den Spannglocken in einem Glockenspannprozess auszurichten, bei dem sich die Spannglocken in einer Antastphase mit leichtem Druck an dem Werkstück anlegen bevor sich das Werkstück in einer Ausrichtphase infolge der Krümmung seiner optischen Flächen selbsttätig in einer Richtung quer zur Zentrierachse verschiebt bis es zwischen den Spannglocken eine Lage eingenommen hat, die den unter den gegebenen geometrischen Verhältnissen minimalen Abstand der Spannglocken ermöglicht, eine Spanneinrichtung zum Aufbringen einer Spannkraft an einer der Zentrierspindelwellen, um das zwischen den Spannglocken ausgerichtete Werkstück in einer sich an die Ausrichtphase anschließenden Spannphase zu spannen, und wenigstens eine relativ zur Zentrierachse bewegbare Bearbeitungseinheit mit einem Werkzeug für eine Randbearbeitung des zwischen den Spannglocken gespannten Werkstücks, mit der Besonderheit, dass die über die Hubeinrichtung axial zustellbare Zentrierspindelwelle mittels eines Drehantriebs drehend antreibbar ist, der wie die Hubeinrichtung koaxial bezüglich der Zentrierachse angeordnet ist, so dass aufgrund der bezüglich der Zentrierachse zentrierten Anordnung des Drehantriebs an der Zentrierspindelwelle lediglich ein Drehmoment um die Zentrierachse erzeugbar ist, ohne Einbringung einer Querkraft in die Zentrierspindelwelle.

Durch die koaxiale Anordnung der Hubeinrichtung und des Drehantriebs für die axial zustellbare Zentrierspindelwelle auf ein und derselben Achse, nämlich der Zentrierachse, erfolgt über diese Einrichtungen während des Glockenspannprozesses, wenn die Zentrierspindelwellen insbesondere in der Ausrichtphase des Glockenspannprozesses optional drehend angetrieben werden, also weder in Verbindung mit der axialen Zustellung der entsprechenden Zentrierspindelwelle bzw. der axialen Krafteinleitung in die entsprechende Zentrierspindelwelle noch in Verbindung mit dem rotativen Antrieb der entsprechenden Zentrierspindelwelle eine Einbringung einer (einseitig resultierenden) Querkraft in dieselbe. Aufgrund der bezüglich der Zentrierachse zentrierten Anordnung des Drehantriebs wird an der entsprechenden Zentrierspindelwelle lediglich ein Drehmoment um die Zentrierachse erzeugt. Infolgedessen besteht keine Gefahr einer Querverschiebung bzw. von Kipp- und/oder Biegemomenten an der entsprechenden, drehend angetriebenen Zentrierspindelwelle, die die präzise Achsflucht der Zentrierspindelwellen und deren Rund- und Planlauf gefährden könnten. Weiterhin geht durch die koaxiale Anordnung von Hubeinrichtung und Drehantrieb von diesen Baugruppen keine Gefahr eines Wärmegangs in bezogen auf die Zentrierachse radialer Richtung aus. Im Ergebnis werden "Abdrücke" und andere Oberflächenbeschädigungen an den zu spannenden und zu bearbeitenden Werkstücken, die bei einem aufgrund mangelnder Achsflucht der drehend angetriebenen Zentrierspindelwellen generierten, nicht tolerierbaren Radial- und/oder Planschlag der Spann- bzw. Zentrierglocken entstehen könnten, zuverlässig vermieden. Darüber hinaus ist der Bauraumbedarf der getroffenen Anordnung in radialer Richtung bezogen auf die Zentrierachse gesehen vorteilhaft gering, was einer guten Zugänglichkeit des zwischen den Spannglocken gespannten Werkstücks bei dessen Bearbeitung förderlich ist.

Vorzugsweise sind ferner die Hubeinrichtung und die Spanneinrichtung koaxial bezüglich der Zentrierachse angeordnet. Dadurch, dass Hubeinrichtung und Spanneinrichtung dann auch auf ein und derselben Achse, nämlich der Zentrierachse liegen, wird über diese Einrichtungen während des Glockenspannprozesses, namentlich in der Spannphase desselben, in Verbindung mit der axialen Zustellung der entsprechenden Zentrierspindelwelle bzw. der axialen Krafteinleitung in die entsprechende Zentrierspindelwelle auch keine Querkraft eingebracht, die eine Querverschiebung, Kipp- und/oder Biegemomente an der entsprechenden Zentrierspindelwelle erzeugen könnte, welche die genaue Achsflucht der Zentrierspindelwellen und deren Rund- und Planlauf gefährden würden. Ferner geht durch die koaxiale Anordnung von Hubeinrichtung und Spanneinrichtung von diesen Einrichtungen auch keine Gefahr eines Wärmegangs in bezogen auf die Zentrierachse radialer Richtung aus. Im Ergebnis kann ein unzulässig großer (größer als 1 bis 2 µm) Radial- und/oder Planschlag infolge der axialen Krafteinleitung in die bzw. der axialen Zustellung der entsprechende(n) Zentrierspindelwelle an den hochgenau geschliffenen Spannflächen der Spann- bzw. Zentrierglocken zuverlässig vermieden werden, so dass hierdurch "Abdrücke" und andere Oberflächenbeschädigungen an den zu spannenden und zu bearbeitenden Werkstücken ebenfalls nicht entstehen können. Ein weiterer Vorteil der Koaxialität bzw. der - entlang der Zentrierachse gesehen - Konzentrizität von Hubeinrichtung und Spanneinrichtung besteht darin, dass diese Anordnung sehr zentrierachsennah, d.h. in radialer Richtung bezogen auf die Zentrierachse gesehen sehr kompakt baut, so dass die wenigstens eine Bearbeitungseinheit bzw. deren Werkzeug gut an das zwischen den Spannglocken gespannte Werkstück gelangen kann und hierfür kein großer vorrichtungstechnischer Aufwand betrieben werden muss.

Für die Hubeinrichtung könnte z.B. ein handelsüblicher Linearmotor in Synchron-, Asynchron oder Doppelkamm-Bauweise Verwendung finden, ggf. mit Stator und Aktor in Leichtbauweise aus kohlefaserverstärkten Kunststoffteilen. Bevorzugt ist es indes, wenn die Hubeinrichtung einen mit der axial zustellbaren Zentrierspindelwelle wirkverbundenen Tauchspulenantrieb (Voice-Coil-Aktuator) aufweist, der wenigstens eine bezüglich der Zentrierachse koaxiale Spule und wenigstens einen mit der Spule zusammenwirkenden Permanentmagneten umfasst. Vorteile eines solchen Tauchspulenantriebs bestehen insbesondere darin, dass er aufgrund seiner - bezüglich der Zentrierachse - koaxialrotationssymmetrischen Bauweise sehr kompakt baut, nur geringe bewegte Massen aufweist und insbesondere in den Antast- und Ausrichtphasen des Glockenspannprozesses eine sehr feinfühlige Regelung der Vorschubkraft gestattet.

Wenngleich der Tauchspulenantrieb grundsätzlich mit ortsfestem Magneten und bewegter Spule (Moving-Coil-Ausführung) ausgebildet sein kann, ist vorzugsweise der Permanentmagnet an einem Rotorteil befestigt, das mit der axial zustellbaren Zentrierspindelwelle verbunden ist, während die den Permanentmagneten umgebende Spule in einem maschinenfesten Tauchspulen-Antriebsgehäuse montiert ist (Moving-Magnet-Ausführung). Auf diese Weise gestalten sich die Bestromung des Tauchspulenantriebs und dessen Kühlung besonders einfach. Der Permanentmagnet kann dann in axialer Richtung sehr kurz bauen, d.h. wesentlich kürzer sein als die Spule, so dass die Vorschubkräfte des Tauchspulenantriebs über den gesamten benötigten Hub vorteilhaft im Wesentlichen gleichförmig sind.

Im weiteren Verfolg des Erfindungsgedankens kann die Spanneinrichtung einen Ringkolben aufweisen, der an der axial zustellbaren Zentrierspindelwelle angebracht ist und auf seiner vom Spannglockenende der axial zustellbaren Zentrierspindelwelle abgewandten Seite eine ringförmige Wirkfläche bildet, welche im Zentrierspindelgehäuse eine Ringkammer begrenzt, über die der Ringkolben pneumatisch beaufschlagbar ist, um die Spannkraft zu erzeugen. Diese Ausgestaltung ermöglicht auf einfache Weise eine gute und sehr feinfühlige Regelung der Spannkraft während der Spannphase des Glockenspannprozesses und ein sicheres Halten des Werkstücks bei dessen Bearbeitung.

Prinzipiell können Spannspindel und Festspindel beliebig im Raum angeordnet sein, solange die Koaxialität der Spindelwellen gewährleistet ist, z.B. in horizontaler Ausrichtung oder in vertikaler Ausrichtung, mit oberer Festspindel und unterer Spannspindel, wie in der Druckschrift DE-A-37 44 118 offenbart. Bevorzugt ist jedoch eine Ausgestaltung, bei der die Zentrierspindel mit der axial zustellbaren Zentrierspindelwelle oberhalb der anderen Zentrierspindel angeordnet ist, wobei der Ringkolben auf seiner dem Spannglockenende der axial zustellbaren Zentrierspindelwelle zugewandten Seite eine weitere ringförmige Wirkfläche bildet, welche im Zentrierspindelgehäuse eine weitere Ringkammer begrenzt, über die der Ringkolben pneumatisch beaufschlagbar ist, um an der axial zustellbaren Zentrierspindelwelle für einen pneumatischen Gewichtsausgleich zu sorgen.

Eine Vertikalanordnung der Zentrierspindeln ist zunächst insofern vorteilhaft, als ein automatisiertes Laden der Werkstücke wesentlich erleichtert wird, weil das auf der unteren Spannglocke aufgelegte Werkstück - anders als bei einer Horizontalanordnung der Zentrierspindeln - dort liegen bleibt. Bei einer solchen Vertikalanordnung der Zentrierspindeln die untere Zentrierspindel als Festspindel und die obere Zentrierspindel als Spannspindel auszubilden hat darüber hinaus insbesondere den Vorteil, dass die Gravitation beim Absenken der Spannspindel hilft und so Stick-Slip-Effekte an den Lagern/ Führungen weniger wahrscheinlich sind, die die axiale Spindelbewegung ungleichförmig machen würden. Für eine feinfühlige Zustellung ist dann aber das Gewicht der Spannspindel und der daran aufgenommenen Spannglocke gegenzuhalten bzw. zu kompensieren, was in vorrichtungstechnisch einfacher Weise mit einem pneumatischen Gewichtsausgleich realisierbar ist.

Ein solcher pneumatischer Gewichtsausgleich hat darüber hinaus - gegenüber z.B. einem Gewichtsausgleich mit Ausgleichsgewicht, wie in der Druckschrift DE-A-100 08 710 offenbart - den Vorteil, dass einem sich infolge der Verwendung unterschiedlicher Spannglocken ändernden Gesamtgewicht von Spindel und Spannglocke leicht Rechnung getragen werden kann.

Besonders vorteilhaft ist hierbei der angesprochene Einsatz des Ringkolbens mit seinen ringförmigen Wirkflächen in doppeltwirkender (Ring)Kolben-(Ring) Zylinder-Anordnung, die infolge ihrer koaxialen Lage bezüglich der Zentrierachse und der Verwendung lediglich eines Ringkolbens nicht nur sehr kompakt baut, und zwar in radialer sowie in axialer Richtung, sondern ebenfalls dafür sorgt, dass sowohl bei Aufbringung der Spannkraft als auch beim Gegenhalten des Gewichts von Spannspindel und Spannglocke keine Querkräfte auf die entsprechende Zentrierspindelwelle ausgeübt werden.

Grundsätzlich kann der Ringkolben mit Dichtungen ausgebildet sein, was den Vorteil eines geringen Druckluftverbrauchs hätte. Bevorzugt ist indes eine dichtungslose Ausbildung des Ringkolbens, womit jegliche Stick-Slip-Effekte wie auch ein Dichtungsverschleiß am Ringkolben vermieden werden. Auch ermöglicht eine geringfügige Druckluftleckage über den Kolbenumfang eine feinere Druckregelung mittels z.B. eines Servodruck-Regelventils, mit zugleich besserer Regelhysterese, weil ein zu hoher Druck nicht erst am Ventil selbst abgebaut werden muss.

In einer vorteilhaften Ausgestaltung der Zentriermaschine kann der Drehantrieb als Innenläufer-Torquemotor ausgebildet sein, mit einem im Zentrierspindelgehäuse montierten Stator und einem von dem Stator stets umgebenen, am Außenumfang der axial zustellbaren Zentrierspindelwelle befestigten Rotor, der länger ist als der Stator und zusammen mit der axial zustellbaren Zentrierspindelwelle bezüglich des Stators axial verlagerbar ist. Vorteile des Torquemotors bestehen insbesondere darin, dass ein Torquemotor konstruktionsbedingt - anders als ein konventioneller Drehstrom-Asynchron- oder Schrittmotor - nur ein geringes "Cogging" (Rucken bei der Drehbewegung, verursacht durch Magnetkräfte) besitzt und direkt hohe Dreh- und Haltemomente bei hohen Stellgenauigkeiten aufbringen kann, wodurch auch während der Bearbeitung des zwischen den Spannglocken gespannten Werkstücks ein sehr guter Synchronlauf der Zentrierspindelwellen gewährleistet werden kann bzw. eine gute Fixierung gegen ein unbeabsichtigtes Verdrehen.

Für die axiale und rotative Lagerung der axial zustellbaren Zentrierspindelwelle können prinzipiell Gleitlager oder Magnetlager zum Einsatz kommen. Im Hinblick auf ein möglichst kleines Lagerspiel, die Freiheit von Stick-Slip-Effekten und einen geringen Verschleiß bei vertretbarem Aufwand ist es jedoch bevorzugt, wenn die axial zustellbare Zentrierspindelwelle mittels einer Luftlageranordnung axial verlagerbar und drehbar im Zentrierspindelgehäuse gelagert ist. Vorzugsweise umfasst die Luftlageranordnung dann wenigstens zwei Luftlagerabschnitte, wobei der Drehantrieb axial zwischen den Luftlagerabschnitten angeordnet ist, was eine hohe Steifigkeit der Führung gewährleistet.

Vorteilhaft kann in der Zentriermaschine eine Planschlag-Messeinrichtung zur Kontrolle der Zentrierung bzw. für eine Prüfung der Ausrichtung des Werkstücks nach dem Glockenspannprozess integriert sein, mittels der in einer Richtung parallel zur Zentrierachse die axiale Lage eines Stirnflächen-Randbereichs des zwischen den Spannglocken gespannten Werkstücks erfassbar ist. Eine solche kostengünstig realisierbare Messeinrichtung kann alternativ oder zusätzlich zu einer an sich bekannten Laser-Zentriereinrichtung vorgesehen werden und ist insbesondere dann von Vorteil, wenn es gilt, Werkstücke mit stark reflektierenden oder nur wenig lichtdurchlässigen Oberflächen zu zentrieren, bei denen Laser-Zentriereinrichtungen ihre Grenzen finden.

Vorzugsweise umfasst die Planschlag-Messeinrichtung einen taktilen Taster, der für eine Positionierung bezüglich des abzutastenden Stirnflächen-Randbereichs am Werkstück zusammen mit der Bearbeitungseinheit bewegbar ist. Gegenüber ebenfalls denkbaren berührungslosen Sensoren, wie optischen Sensoren, bestehen hier zunächst Vorteile darin, dass solche taktilen Taster robust sind, ein gutes Preis-Leistungs-Verhältnis aufweisen und unabhängig von den Materialeigenschaften (z.B. reflektierend oder absorbierend) des Werkstücks arbeiten, wobei auch geringfügige Verschmutzungen (etwa Kühlschmierstoff-Tröpfchen) auf den abzutastenden Werkstückoberflächen keine Probleme bereiten. Da der taktile Taster ferner zusammen mit der Bearbeitungseinheit bewegbar ist, sind für die Planschlag-Messeinrichtung in vorteilhafter Weise keine zusätzlichen Bewegungsachsen erforderlich.

In zweckmäßiger Ausgestaltung kann schließlich der Taster der Planschlag-Messeinrichtung bezüglich der Bearbeitungseinheit von einer geschützten Parkposition hinter dem Werkzeug in eine gegenüber dem Werkzeug vorstehende Messposition bewegbar sein und umgekehrt, so dass der Taster bei der eigentlichen Randbearbeitung geschützt ist und eine Kollision mit dem Werkstück nicht zu befürchten steht.

### KURZE BESCHREIBUNG DER ZEICHNUNGEN

Im Folgenden wird die Erfindung anhand eines bevorzugten Ausführungsbeispiels einer Zentriermaschine unter Bezugnahme auf die beigefügten, teilweise vereinfachten bzw. schematischen Zeichnungen näher erläutert. Zur Vereinfachung der Darstellung wurden in den Zeichnungen neben Teilen der Verkleidung der Zentriermaschine insbesondere auch die Bedieneinheit und Steuerung, Scheiben, Ablagen für Werkstücke und Werkzeuge, die Versorgungseinrichtungen (einschließlich Leitungen, Schläuche und Rohre) für Strom, Druckluft und Kühlschmierstoff, der Rücklauf für den Kühlschmierstoff sowie die Mess-, Wartungs- und Sicherheitseinrichtungen zumeist weggelassen, jedenfalls soweit sie für das Verständnis der Erfindung nicht erforderlich sind. In den Zeichnungen zeigen:
- Fig. 1: eine perspektivische Ansicht einer erfindungsgemäßen Zentriermaschine für insbesondere optische Linsen als Werkstücke von schräg oben / vorne rechts;
- Fig. 2: eine im Maßstab gegenüber der Fig. 1 vergrößerte, abgebrochene perspektivische Ansicht der Zentriermaschine gemäß Fig. 1 von schräg oben / seitlich rechts;
- Fig. 3: eine Vorderansicht der Zentriermaschine gemäß Fig. 1;
- Fig. 4: eine perspektivische Ansicht der Zentriermaschine gemäß Fig. 1 von schräg oben / hinten;
- Fig. 5: eine perspektivische Ansicht einer oberen Zentrierspindel-Baugruppe der Zentriermaschine gemäß Fig. 1 in einer von der Zentriermaschine im Übrigen isolierten Darstellung, mit einer Spannglocke (unten), die an einer in einem Zentrierspindelgehäuse gelagerten Zentrierspindelwelle aufgenommen ist;
- Fig. 6: eine Längsschnittansicht der oberen Zentrierspindel-Baugruppe gemäß Fig. 5;
- **Fig.** 7: eine vergrößerte Darstellung des insbesondere eine elektrische Hubeinrichtung für die Zentrierspindelwelle zeigenden Details VII in Fig. **6****,** mit zusätzlich angedeuteter Druckluftversorgung für eine Luftlageranordnung zur Lagerung eines Messkopfs auf der Zentrierspindelwelle;
- **Fig.** 8: eine vergrößerte Darstellung des insbesondere einen elektrischen Drehantrieb und eine kombinierte pneumatische Spann- und Gewichtsausgleichseinrichtung für die Zentrierspindelwelle zeigenden Details VIII in Fig. 6, mit zusätzlich angedeuteter Druckluftversorgung für einen oberen Luftlagerabschnitt einer Luftlageranordnung zur Lagerung der Zentrierspindelwelle in dem Zentrierspindelgehäuse;
- Fig. 9: eine vergrößerte Darstellung des insbesondere die Spannglockenaufnahme an der Zentrierspindelwelle zeigenden Details IX in Fig. 6, mit zusätzlich angedeuteter Druckluftversorgung für einen unteren Luftlagerabschnitt der Luftlageranordnung zur Lagerung der Zentrierspindelwelle in dem Zentrierspindelgehäuse;
- Fig. 10: eine Längsschnittansicht der oberen Zentrierspindel-Baugruppe gemäß Fig. 5, mit angedeuteter Stromversorgung für die Hubeinrichtung und Druckluftversorgung / Ventilanordnung für die kombinierte pneumatische Spann- und Gewichtsausgleichseinrichtung, in einem Zustand nach erfolgtem Gewichtsausgleich in Vorbereitung eines Glockenspannprozesses;
- Fig. 11: eine der Fig. 10 ähnliche Längsschnittansicht der oberen Zentrierspindel-Baugruppe gemäß Fig. 5, mit nach der Antastphase des Glockenspannprozesses auf eine optische Linse abgesenkter Spannglocke während der Ausrichtphase des Glockenspannprozesses;
- Fig. 12: eine den Fig. 10 und 11 ähnliche Längsschnittansicht der oberen Zentrierspindel-Baugruppe gemäß Fig. 5, in einem Zustand während der Spannphase des Glockenspannprozesses;
- Fig. 13: eine perspektivische Ansicht einer in den Fig. 1 und 3 linken, eine Schleifspindel mit einer daran drehbar gehaltenen Schleifscheibe aufweisenden Bearbeitungseinheit der Zentriermaschine gemäß Fig. 1 in einer von der Zentriermaschine im Übrigen isolierten Darstellung, zur Veranschaulichung einer Kühlschmierstoff-Versorgungseinrichtung für die Zufuhr eines Kühlschmierstoffs zu der Schleifscheibe;
- Fig. 14: eine vergrößerte Schnittansicht insbesondere der Kühlschmierstoff-Versorgungseinrichtung gemäß Fig. 13 entsprechend der Schnittverlaufslinie XIV-XIV in den Fig. 3 und 13;
- Fig. 15: eine vergrößerte Schnittansicht der Kühlschmierstoff-Versorgungseinrichtung gemäß Fig. 13 entsprechend der Schnittverlaufslinie XV-XV in Fig. 14;
- Fig. 16: eine vergrößerte Schnittansicht der Kühlschmierstoff-Versorgungseinrichtung gemäß Fig. 13 entsprechend der Schnittverlaufslinie XVI-XVI in Fig. 14; und
- Fig. 17 bis 19: perspektivische Ansichten der in den Fig. 1 und 3 rechten Bearbeitungseinheit der Zentriermaschine gemäß Fig. 1 in einer von der Zentriermaschine im Übrigen isolierten Darstellung, ohne Spritzschutz und Kühlschmierstoff-Versorgungseinrichtung, zur Veranschaulichung der Arbeitsweise einer in der Zentriermaschine integrierten Planschlag-Messeinrichtung zur Kontrolle der Zentrierung der - wie in diesen Figuren ebenfalls schematisch angedeutet - zwischen den Spannglocken gehaltenen optischen Linse.

### DETAILLIERTE BESCHREIBUNG DES AUSFÜHRUNGSBEISPIELS

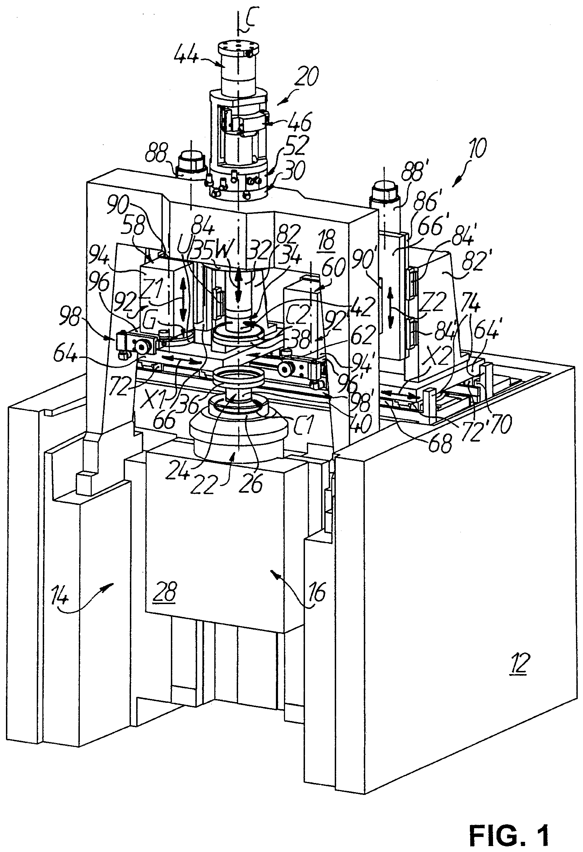

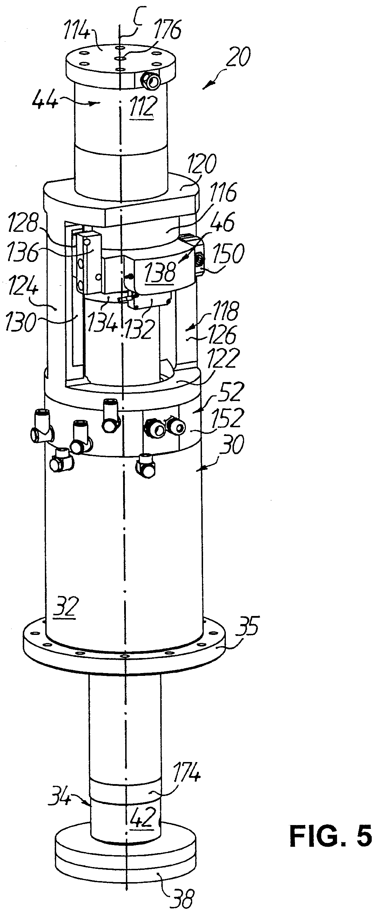

In den Fig. 1 bis 4 ist eine CNC-geregelte Zentriermaschine für Werkstücke, namentlich optische Linsen L mit 10 beziffert. Die Zentriermaschine 10 hat ein Maschinenbett 12 aus Polymerbeton, das einen in Fig. 1 vorderen Aufnahmeraum 14 für eine untere Zentrierspindel-Baugruppe 16 aufweist, die fest an dem Maschinenbett 12 montiert ist. In dem Aufnahmeraum 14 ist ein brückenartiges Portal 18 auf dem Maschinenbett 12 aufgeständert, welches sich nach oben über Letzteres wegerstreckt und an zentraler Stelle eine obere Zentrierspindel-Baugruppe 20 trägt, die nachfolgend unter Bezugnahme auf die Fig. 5 bis 12 noch ausführlich beschrieben werden wird. Die untere Zentrierspindel-Baugruppe 16 umfasst eine untere Zentrierspindel 22 (Festspindel), deren über einen Innenläufer-Torquemotor (nicht gezeigt) um eine Werkstück-Drehachse C1 drehend antreibbare, aber axiale feste untere Zentrierspindelwelle 24 mittels Luftlagern (nicht dargestellt) gelagert in einem unteren Zentrierspindelgehäuse 26 aufgenommen ist, welches seinerseits mit einem Umgehäuse 28 am Maschinenbett 12 befestigt ist.

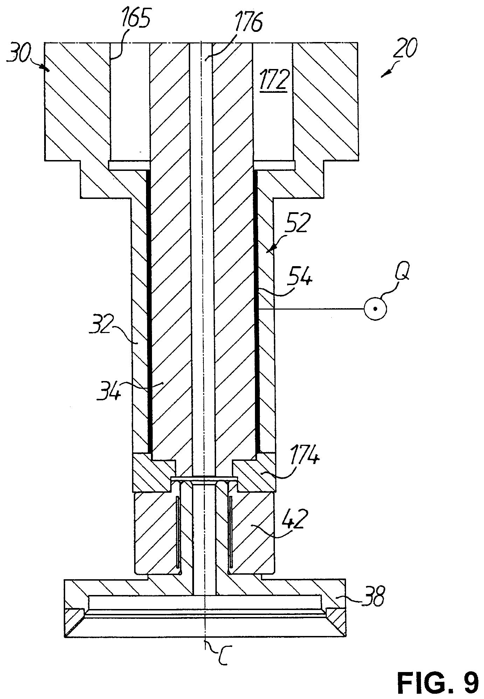

Wie noch näher erläutert werden wird umfasst die obere Zentrierspindel-Baugruppe 20 zunächst eine obere Zentrierspindel 30 (Spannspindel) mit einem oberen Zentrierspindelgehäuse 32, in dem eine um eine Werkstück-Drehachse C2 drehend antreibbare obere Zentrierspindelwelle 34 axial verschiebbar aufgenommen ist. Die obere Zentrierspindel 30 durchgreift mit ihrem Zentrierspindelgehäuse 32 eine zentrale Öffnung im Portal 18, mit dem das Zentrierspindelgehäuse 32 von unten über einen Lagerring 35 (in Fig. 9 weggelassen) verschraubt ist. Die untere Zentrierspindelwelle 24 und die obere Zentrierspindelwelle 34 sind derart angeordnet, dass sie bezüglich einer vertikal verlaufenden Zentrierachse C axial fluchten, und an den einander zugewandten Enden jeweils zur Aufnahme einer Spannglocke 36, 38 ausgebildet, wie sie aus der schon eingangs erwähnten deutschen Norm DIN 58736-3 bekannt ist. Beide Zentrierspindelwellen 24, 34 sind unabhängig voneinander im Drehwinkel lagegeregelt um die Werkstück-Drehachsen C1, C2 drehend antreibbar; ein Synchronlauf der Zentrierspindelwellen 24, 34 wird CNC-technisch bewirkt. Zur spielfreien und festen Aufnahme der Spannglocken 36, 38 ist jede Zentrierspindelwelle 24, 34 endseitig mit einem an sich bekannten Hydrodehnfutter 40, 42 versehen.

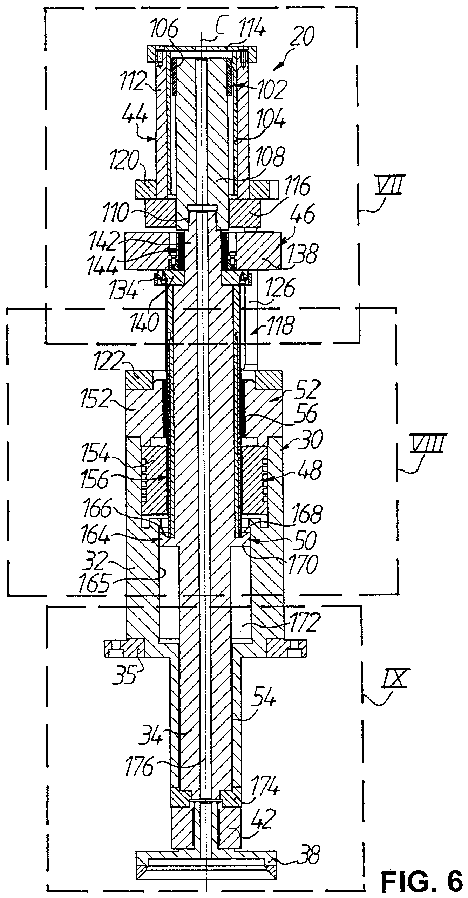

Ferner umfasst die obere Zentrierspindel-Baugruppe 20 gemäß insbesondere den Fig. 6 bis 9 allgemein - in einer Reihenfolge von oben nach unten in den Figuren gesehen; später noch jeweils detailliert beschrieben - (i) eine Hubeinrichtung 44, mittels der die obere Zentrierspindelwelle 34 bezüglich der unteren Zentrierspindelwelle 24 entlang der Zentrierachse C feinfühlig axial zustellbar ist (lagegeregelte Spannglocken-Linearachse W), um die optische Linse L zwischen den Spannglocken 36, 38 auszurichten, (ii) ein Messsystem 46 zur Erfassung der Axialposition und der Winkelposition der oberen Zentrierspindelwelle 34 bezüglich des oberen Zentrierspindelgehäuses 32, (iii) einen Drehantrieb 48, mittels dessen die über die Hubeinrichtung 44 axial zustellbare obere Zentrierspindelwelle 34 drehend antreibbar ist, (iv) eine - im dargestellten Ausführungsbeispiel kombinierte - pneumatische Spann- und Gewichtsausgleichseinrichtung 50, die insbesondere der Aufbringung einer Spannkraft an der oberen Zentrierspindelwelle 34 dient, um die zwischen den Spannglocken 36, 38 ausgerichtete optische Linse L zu spannen, sowie einer Luftlageranordnung 52 mit zwei Luftlagerabschnitten 54, 56 für die obere Zentrierspindelwelle 34, wobei der Drehantrieb 48 und die Spann- und Gewichtsausgleichseinrichtung 50 axial zwischen den Luftlagerabschnitten 54, 56 liegen, mit der Besonderheit, dass die Hubeinrichtung 44, der Drehantrieb 48 und die Spann- und Gewichtsausgleichseinrichtung 50 koaxial bezüglich der Zentrierachse C angeordnet sind.

Wie weiterhin insbesondere den Fig. 1 bis 4 zu entnehmen ist weist die Zentriermaschine 10 zwei relativ zur Zentrierachse C bewegbare Bearbeitungseinheiten 58, 60 mit jeweils einer Schleifscheibe G als Werkzeug für eine Randbearbeitung der zwischen den Spannglocken 36, 38 gespannten optischen Linse L auf. Beide Bearbeitungseinheiten 58, 60 sind unabhängig voneinander in einem von dem Portal 18 seitlich und nach oben begrenzten Arbeitsraum 62 bewegbar, in den auch die beiden Zentrierspindeln 22, 30 mit ihren Spannglocken 36, 38 von unten bzw. oben hineinragen, und zwar jeweils in einer Richtung parallel zur Zentrierachse C (lagegeregelte Werkzeug-Linearachse Z1 bzw. Z2) und in einer Richtung senkrecht hierzu (lagegeregelte Werkzeug-Linearachse X1 bzw. X2). Der Bewegungsmechanismus hierfür umfasst zwei bezüglich einer gedachten, die Zentrierachse C beinhaltenden Ebene spiegelsymmetrisch angeordnete und ausgebildete "gekippte" Kreuztischanordnungen mit jeweils einem angetriebenen X-Schlitten 64, 64' und jeweils einem angetriebenen Z-Schlitten 66, 66'.

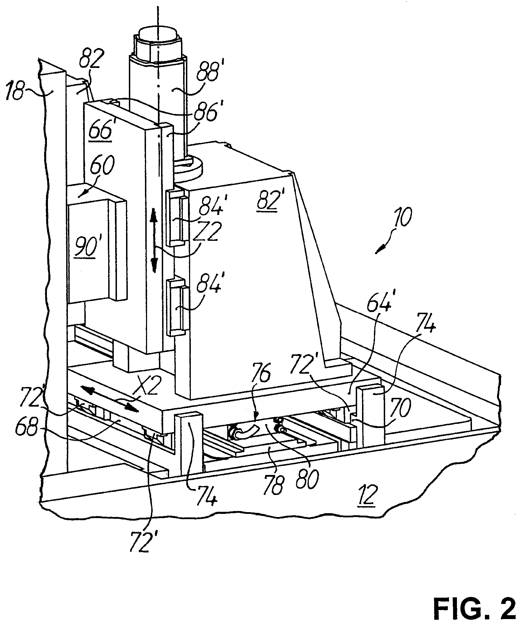

Genauer gesagt sind in den Fig. 1 bis 3 hinter dem Portal 18 und parallel hierzu zwei ebenfalls parallel zueinander verlaufende Führungsschienen 68, 70 auf dem Maschinenbett 12 montiert, die der axialen Führung beider X-Schlitten 64, 64' dienen, wozu jeder X-Schlitten 64, 64' mit zwei Paaren von Führungswagen 72, 72' ausgerüstet ist, von denen das eine Paar mit der einen Führungsschiene 68 und das andere Paar mit der anderen Führungsschiene 70 eingreift. Für den linearen Antrieb der auf den mit gummigepufferten (nicht näher gezeigt) Endanschlägen 74 versehenen Führungsschienen 68, 70 geführten X-Schlitten 64, 64' ist für jeden Schlitten ein Linearmotor 76 vorgesehen (lediglich für den in den Fig. 1 und 2 rechten X-Schlitten 64' zu sehen), jeweils mit einem von oben auf dem Maschinenbett 12 montierten Stator 78 (Magnete) und einem von unten am jeweiligen X-Schlitten 64, 64' montierten Läufer 80 (Spulen), wie am besten in Fig. 2 zu erkennen ist.

Auf jedem X-Schlitten 64, 64' ist von oben eine Konsole 82, 82' aufgeschraubt, an der der jeweilige Z-Schlitten 66, 66' geführt ist. Hierfür sind an der jeweiligen Konsole 82, 82' auf der dem Portal 18 zugewandten Stirnseite in paralleler Anordnung zwei Paare von Führungswagen 84, 84' montiert, die mit an jedem Z-Schlitten 66, 66' paarweise parallel zueinander angebrachten Führungsschienen 86, 86' eingreifen. Für den linearen Antrieb der Z-Schlitten 66, 66' ist jeweils ein Servomotor 88, 88' vorgesehen, der von oben an der jeweiligen Konsole 82, 82' angeflanscht ist und eine Gewindespindel (nicht gezeigt) antreibt, die mit einer schlittenseitigen Gewindemutter (ebenfalls nicht dargestellt) eingreift. Auf jedem Z-Schlitten 66, 66' ist dem Portal 18 zugewandt ein Spindelbock 90, 90' angebracht, an dem eine Schleifspindel 92, 92' der jeweiligen Bearbeitungseinheit 58, 60 mit ihrem Schleifspindelgehäuse 94, 94' montiert ist. Jede Schleifspindel 92, 92' umfasst in an sich bekannter Weise einen elektrischen Drehantrieb (nicht näher gezeigt) für die jeweilige Schleifscheibe G.

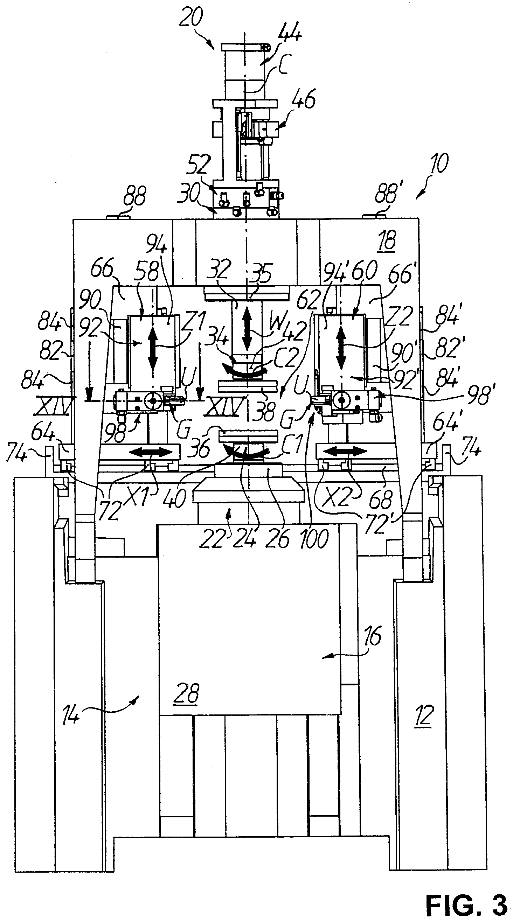

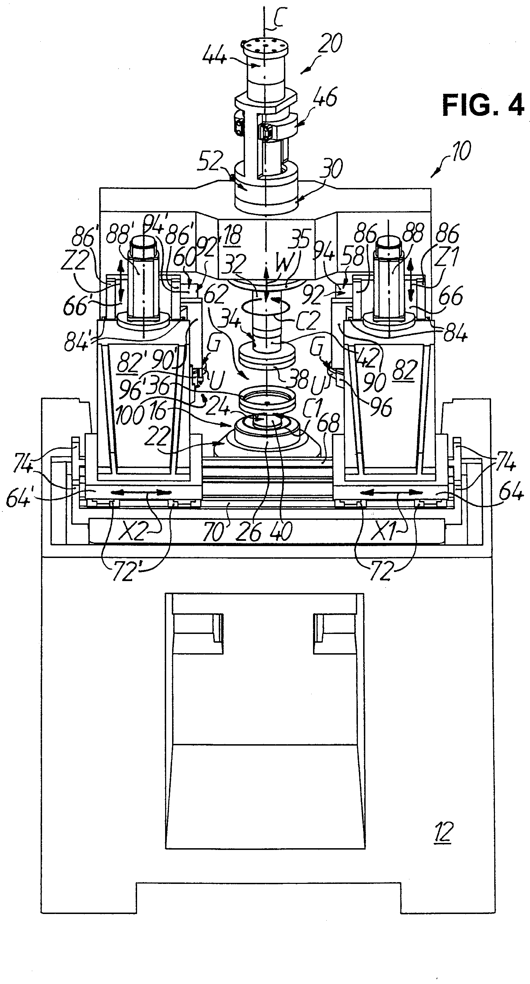

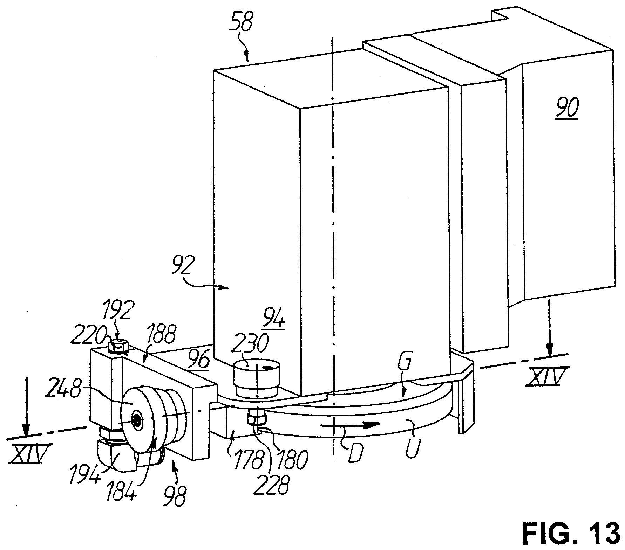

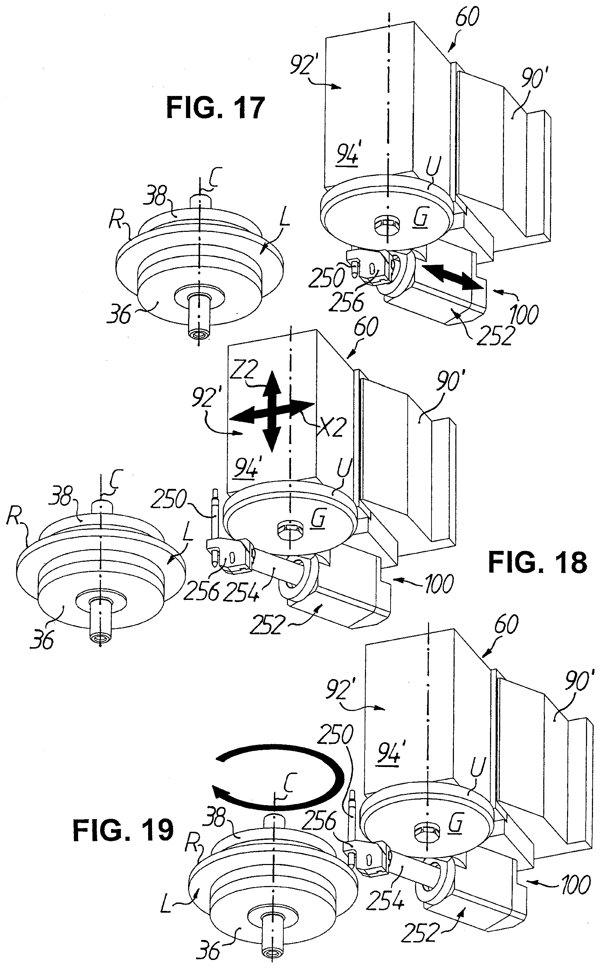

Zu erkennen sind in den Fig. 1, 3 und 4 schließlich noch ein an jedem Schleifspindelgehäuse 94, 94' angebrachter Spritzschutz 96, 96', der die jeweilige Schleifscheibe G bis auf einen Eingriffsbereich für die Randbearbeitung der optischen Linse L umgibt, und an jeder Bearbeitungseinheit 58, 60 eine Kühlschmierstoff-Versorgungseinrichtung 98, 98', die über den Spritzschutz 96, 96' am jeweiligen Schleifspindelgehäuse 94, 94' montiert ist und nachfolgend anhand der Fig. 13 bis 16 noch ausführlich beschrieben werden wird. Darüber hinaus sind in den Fig. 3 und 4 noch Teile einer Planschlag-Messeinrichtung 100 zur Kontrolle der Zentrierung zu sehen, die bei der Bearbeitungseinheit 60 von unten am Spindelbock 90' angeflanscht ist und später unter Bezugnahme auf die Fig. 17 bis 19 noch im Detail erläutert werden wird.

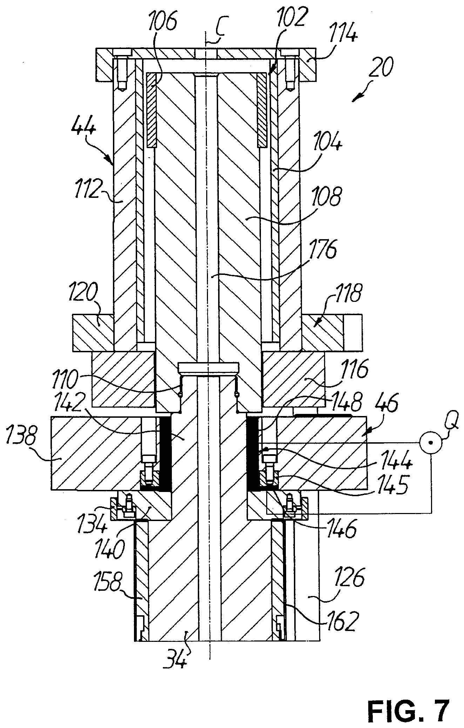

In den Fig. 5 bis 9 sind weitere Details der oberen Zentrierspindel-Baugruppe 20 zu sehen. Gemäß insbesondere den Fig. 6 und 7 weist die Hubeinrichtung 44 einen mit der axial zustellbaren oberen Zentrierspindelwelle 34 wirkverbundenen Tauchspulenantrieb 102 auf, der eine (oder mehrere) bezüglich der Zentrierachse C koaxiale Spule(n) 104 und wenigstens einen mit der Spule 104 zusammenwirkenden Permanentmagneten 106 umfasst. Während der Permanentmagnet 106 an einem Rotorteil 108 befestigt ist, das mit der axial zustellbaren oberen Zentrierspindelwelle 34 über eine Verschraubung 110 fest verbunden ist, so dass es zusammen mit der oberen Zentrierspindelwelle 34 rotieren kann, ist die den Permanentmagneten 106 umgebende Spule 104 in einem maschinenfesten Tauchspulen-Antriebsgehäuse 112 montiert, das seinerseits die Spule 104 umgibt. In Fig. 7 nach oben ist das im Wesentlichen hohlzylindrische Tauchspulen-Antriebsgehäuse 112 mit einem daran festgeschraubten Gehäusedeckel 114 verschlossen. Von unten in Fig. 7 ist eine ringförmige Flanschplatte 116 am Tauchspulen-Antriebsgehäuse 112 angeschraubt (die Schrauben sind nicht gezeigt), durch die sich das Rotorteil 108 hindurch erstreckt.

Das Tauchspulen-Antriebsgehäuse 112 mit der Spule 104, dem Gehäusedeckel 114 und der Flanschplatte 116 ist gegenüber dem oberen Zentrierspindelgehäuse 32 über einen Antriebshalter 118 abgestützt, der am besten in Fig. 5 zu sehen ist. Der Antriebshalter 118 umfasst eine obere Ringscheibe 120 und eine untere Ringscheibe 122, die über zwei Stege 124, 126 miteinander verbunden sind, welche parallel zur Zentrierachse C verlaufen und - bezogen auf die Zentrierachse C - einander diametral gegenüberliegen. Das Tauchspulen-Antriebsgehäuse 112 erstreckt sich durch die obere Ringscheibe 120 des Antriebshalters 118 hindurch und ist mit diesem über die Flanschplatte 116 fest verbunden, die von unten mittels Schrauben (ebenfalls nicht dargestellt) an der oberen Ringscheibe 120 angeflanscht ist.

In dem Freiraum zwischen den Ringscheiben 120, 122 und den Stegen 124, 126 des Antriebshalters 118 ist das Messsystem 46 zur Erfassung der Axial- und Winkelpositionen der oberen Zentrierspindelwelle 34 aufgenommen. Das Messsystem 46 umfasst gemäß insbesondere Fig. 5 einen Axialmesskopf 128, der in an sich bekannter Weise mit einem Maßband 130 zusammenwirkt, um die Axialposition der oberen Zentrierspindelwelle 34 bezüglich des Zentrierspindelgehäuses 32 zu erfassen, und einen Winkelmesskopf 132, welcher in an sich bekannter Weise mit einem Messring 134 (siehe die Fig. 6 und 7) zusammenwirkt, um die Winkelposition der oberen Zentrierspindelwelle 34 um die Zentrierachse C zu erfassen.

Während das Maßband 130 an dem in Fig. 5 linken Steg 124 des Antriebshalters 118 befestigt ist, wobei es den Freiraum zwischen den Ringscheiben 120, 122 des Antriebshalters 118 fast vollständig überbrückt, ist der Axialmesskopf 128 über einen Messkopfadapter 136 an einem Messkopfträger 138 angebracht. An dem Messkopfträger 138 ist auch der Winkelmesskopf 132 befestigt. Der Messring 134 hingegen ist gemäß den Fig. 6 und 7 an einem Messringträger 140 angebracht, der an einem oberen Absatz 142 der oberen Zentrierspindelwelle 34 drehfest mit Letzterer verbunden ist.

Der Messkopfträger 138 ist gegenüber der oberen Zentrierspindelwelle 34 über eine kombinierte Axial/Radial-Luftlageranordnung 144 gelagert, die gemäß Fig. 7 an einem am Messkopfträger 138 angeschraubten Lagerring 145 ein ringförmiges poröses Axiallagerpad 146 und am Innenumfang des Messkopfträgers 138 eine poröse Radiallagerbuchse 148 umfasst. Wie in Fig. 7 auch gezeigt ist sind das Axiallagerpad 146 und die Radiallagerbuchse 148 der Axial/Radial-Luftlageranordnung 144 an eine Druckluftquelle Q angeschlossen, wobei das Axiallagerpad 146 den Messkopfträger 138 gegenüber dem Messringträger 140 lagert, während die Radiallagerbuchse 148 den Messkopfträger 138 auf dem oberen Absatz 142 der Zentrierspindelwelle 34 lagert. In Fig. 5 ist bei 150 schließlich noch eine luftgelagerte Verdrehsicherung angedeutet, über die sich der Messkopfträger 138 am in Fig. 5 rechten Steg 126 des Antriebshalters 118 rotativ abstützt.

Es ist ersichtlich, dass sich der Messkopfträger 138 zusammen mit der oberen Zentrierspindelwelle 34 sehr leichtgängig in axialer Richtung relativ zum maschinenfesten Zentrierspindelgehäuse 32 bewegen kann, die Drehbewegung der Zentrierspindelwelle 34 hingegen infolge seiner Drehmomentabstützung gegenüber dem Antriebshalter 118 nicht mitmacht und auch nicht behindert. Insofern gestattet das Messsystem 46 eine sehr genaue und feinfühlige Erfassung der Axial- und Winkelpositionen der oberen Zentrierspindelwelle 34 bezüglich des Zentrierspindelgehäuses 32.

Gemäß den Fig. 5, 6 und insbesondere 8 ist der Antriebshalter 118 mit seiner unteren Ringscheibe 122 auf einem ringförmigen Lagerflansch 152 angeflanscht, der seinerseits mit dem Zentrierspindelgehäuse 32 verschraubt ist (die Verbindungsmittel sind wiederum nicht gezeigt) und dieses nach oben verschließt. Am Innenumfang des Lagerflanschs 152 ist der mit der Druckluftquelle Q verbundene, obere Luftlagerabschnitt 56 der Luftlageranordnung 52 für die Zentrierspindelwelle 34 in Form einer porösen Radiallagerbuchse befestigt. Der untere Luftlagerabschnitt 54 der Luftlageranordnung 52, der ebenfalls an die Druckluftquelle Q angeschlossen ist, ist am besten in Fig. 9 zu erkennen. Auch hierbei handelt es sich um eine poröse Radiallagerbuchse, die in einem verjüngten, unteren Abschnitt des Zentrierspindelgehäuses 32 montiert ist. Demgemäß ist die axial zustellbare obere Zentrierspindelwelle 34 mittels der Luftlageranordnung 52 derart im Zentrierspindelgehäuse 32 gelagert, dass sie relativ zum Zentrierspindelgehäuse 32 sehr leichtgängig axial verlagerbar und drehbar ist. Wie weiter oben bereits angedeutet sind der Drehantrieb 48 hierfür wie auch die an der Zentrierspindelwelle 34 wirkende Spann- und Gewichtsausgleichseinrichtung 50 in koaxial fluchtender Anordnung zwischen den Luftlagerabschnitten 54, 56 im Zentrierspindelgehäuse 32 aufgenommen.

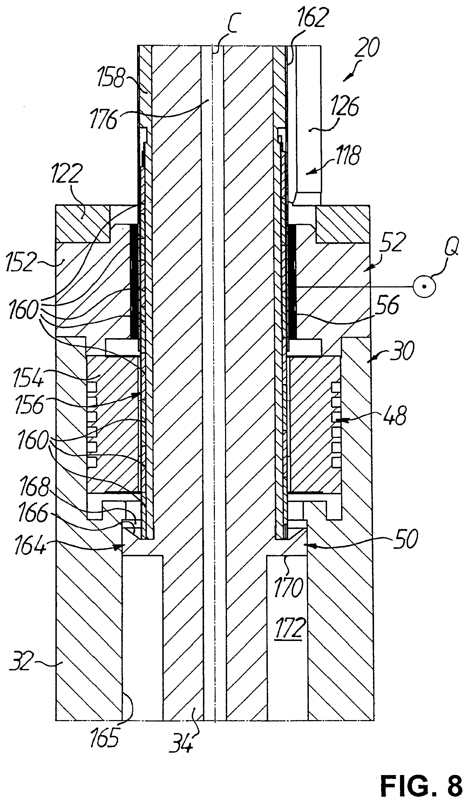

Bei dem Drehantrieb 48 handelt es sich um einen Innenläufer-Torquemotor, mit einem im Zentrierspindelgehäuse 32 montierten Stator 154 (Wicklung) und einem von dem Stator 154 stets umgebenen, am Außenumfang der axial zustellbaren oberen Zentrierspindelwelle 34 befestigten Rotor 156, der in axialer Richtung deutlich länger ist als der Stator 154 und zusammen mit der Zentrierspindelwelle 34 bezüglich des Stators 154 axial verlagerbar ist. Gemäß Fig. 8 umfasst der Rotor 156 eine auf der Zentrierspindelwelle 34 befestigte Rotorhülse 158, die ihrerseits auf ihrem Außenumfang die Magneten 160 des Drehantriebs 48 trägt, welche mit der Rotorhülse 158 vermittels eines Kunststoffs bzw. -harzes vergossen sind. Axial im Bereich des oberen Luftlagerabschnitts 56 der Luftlageranordnung 52 sind die Rotorhülse 158 bzw. die Magneten 160 noch von einer dünnen Lagerhülse 162 des Rotors 156 fest umgeben.

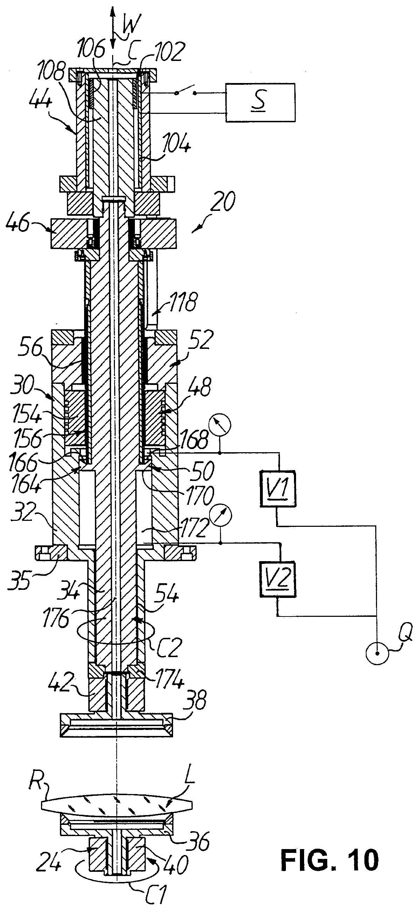

Unterhalb des Drehantriebs 48 ist die Spann- und Gewichtsausgleichseinrichtung 50 im Zentrierspindelgehäuse 32 angeordnet. Wie am besten in den Fig. 6 und 8 zu sehen ist weist die Spann- und Gewichtsausgleichseinrichtung 50 einen dichtungslos ausgebildeten Ringkolben 164 auf, der am Außenumfang der axial zustellbaren Zentrierspindelwelle 34 unmittelbar unterhalb des Rotors 156 des Drehantriebs 48 angebracht ist und nur einen kleinen Ringspalt (in den Figuren nicht zu erkennen) zu einer Zylinderwandung 165 im Zentrierspindelgehäuse 32 belässt. Der Ringkolben 164 bildet auf seiner vom Spannglockenende der oberen Zentrierspindelwelle 34 abgewandten Seite eine ringförmige Wirkfläche 166 aus, die im Zentrierspindelgehäuse 32 dem Stator 154 des Drehantriebs 48 benachbart eine Ringkammer 168 begrenzt, über die der Ringkolben 164 pneumatisch beaufschlagbar ist, um die - in den Figuren nach unten wirkende - Spannkraft zu erzeugen. Auf seiner dem Spannglockenende der oberen Zentrierspindelwelle 34 zugewandten Seite bildet der Ringkolben 164 eine weitere ringförmige Wirkfläche 170 aus, welche größer ist als die Wirkfläche 166 zum Spannen und im Zentrierspindelgehäuse 32 eine weitere Ringkammer 172 begrenzt, über die der Ringkolben 164 pneumatisch beaufschlagbar ist, um an der oberen Zentrierspindelwelle 34 für einen pneumatischen Gewichtsausgleich - mit Kraftrichtung nach oben in den Figuren - zu sorgen. Die Druckluftversorgung für die Ringkammern 168, 172 der Spann- und Gewichtsausgleichseinrichtung 50 ist lediglich in den Fig. 10 bis 12 schematisch gezeigt (Druckluftquelle Q, Servo-Druckregelventile V1, V2). Ebenfalls angedeutete Manometer sollen hier signalisieren, wann im Glockenspannprozess welche Ringkammer 168 bzw. 172 pneumatisch beaufschlagt wird.

Die Fig. 9 zeigt schließlich das in Fig. 6 untere Spannglockenende der oberen Zentrierspindelwelle 34. Die Spannglocke 38 und das Hydrodehnfutter 42 für die Aufnahme der Spannglocke 38 sind hinlänglich bekannt, so dass diese Teile keiner weiteren Erläuterung bedürfen. Das Hydrodehnfutter 42 ist über einen Verbindungsring 174 mit Labyrinthdichtung zum Zentrierspindelgehäuse 32 fest mit der Zentrierspindelwelle 34 verbunden. Im Übrigen beziffert in den Fig. 5 bis 12 das Bezugszeichen 176 eine Durchgangsbohrung, die sich vom Gehäusedeckel 114 des Tauchspulen-Antriebsgehäuses 112 bis zur Spannglocke 38 erstreckt und in an sich bekannter Weise den optionalen Einsatz einer Laser-Zentriereinrichtung (nicht gezeigt) ermöglicht.

Der Ablauf eines Glockenspannprozesses soll nunmehr anhand der Fig. 10 bis 12 kurz erläutert werden, in denen von der unteren Zentrierspindel bzw. deren Zentrierspindelwelle 24 nur das daran gehaltene Hydrodehnfutter 40 mit der unteren Spannglocke 36 gezeigt ist.

Für eine feinfühlige Zustellung der Spannglocke 38 über die obere Zentrierspindelwelle 34 ist zunächst das Gewicht der Zentrierspindelwelle 34 mit der jeweils daran angebrachten Spannglocke 38 und allen axial entlang der Zentrierachse C mitbewegten Teilen - Hydrodehnfutter 42, Verbindungsring 174, Ringkolben 164 der Spann- und Gewichtsausgleichseinrichtung 50, Rotor 156 des Drehantriebs 48, Messringträger 140 und Messkopfträger 138 mit den daran angebrachten Komponenten des Messsystems 46, Rotorteil 108 und Permanentmagnet 106 der Hubeinrichtung 44 - zu kompensieren. Hierzu wird die Ringkammer 172 der Spann- und Gewichtsausgleichseinrichtung 50 über das Servo-Druckregelventil V2 mit einem feinfühlig geregelten Fluiddruck beaufschlagt, der auf die untere Wirkfläche 170 des Ringkolbens 164 wirkt, so dass dieser die genannten Bauteile anhebt. Dabei wird der Fluiddruck bei abgeschaltetem Tauchspulenantrieb 102 so geregelt, dass die Zentrierspindelwelle 34 fast keine Vertikalbewegung mehr ausführt und in der Schwebe gehalten wird. Die Vertikalbewegung wird hierbei durch das in der Zentrierspindel-Baugruppe 20 integrierte Messsystem 46 erfasst, wobei ein vorgewählter Schwellwert einer Restgeschwindigkeit der Vertikalbewegung diesen Regelprozess begrenzt. Der jetzt über das Servo-Druckregelventil V2 in der unteren Ringkammer 172 eingeregelte Fluiddruck wird für den weiteren Prozess konstant gehalten. Der Ausgangszustand nach erfolgter Gewichtskompensation ist in Fig. 10 dargestellt.

Nun kann die Antastphase des Glockenspannprozesses beginnen, in der die obere Spannglocke 38 in Richtung auf die untere Spannglocke 36 bewegt wird, um mit der auf der unteren Spannglocke 36 aufgelegten Linse L in Kontakt zu treten. Hierzu wird der Tauchspulenantrieb 102 der Hubeinrichtung 44 über den Stromregler S bestromt, um die obere Spannglocke 38 mit sehr feinfühlig regelbarer Kraft und klar definiertem Weg abzusenken bis die obere Spannglocke 38 auf der Linse L aufliegt (Ende der Antastphase).

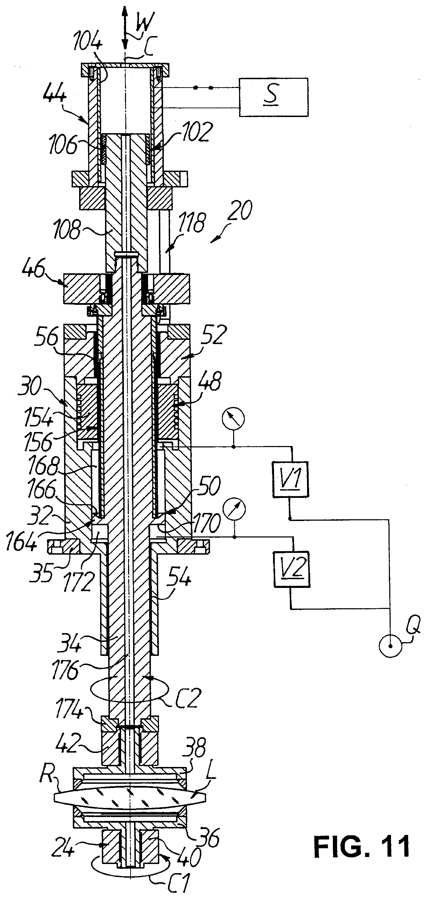

Dann können die Zentrierspindelwellen 24, 34 um die Zentrierachse C drehend angetrieben werden, wodurch die Linse L - ggf. unter Zugabe eines Gleitmittels - leichter in Position rutscht, wobei sich ihre beiden Radienflächen an den Ringschneiden der Spannglocken 36, 38 anlegen (Ende der Ausrichtphase). Dieser Zustand ist in Fig. 11 dargestellt.

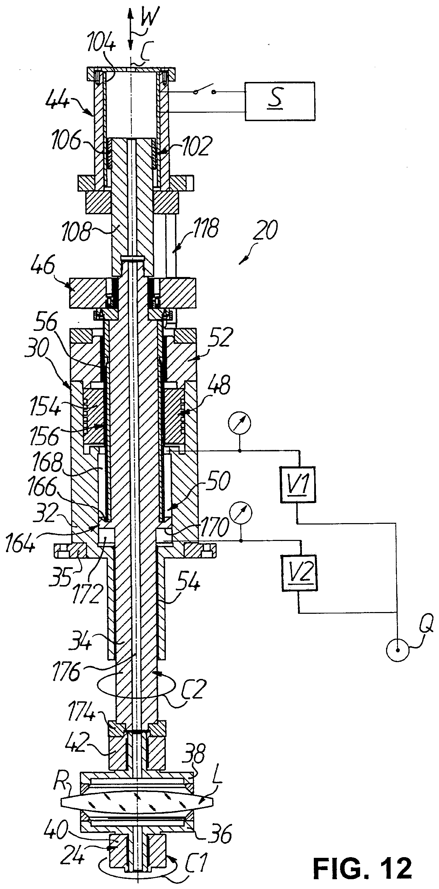

Nachdem die Linse L somit zu ihrer optischen Achse ausgerichtet ist, wird für die Spannphase des Glockenspannprozesses der Tauchspulenantrieb 102 der Hubeinrichtung 44 gemäß Fig. 12 wieder abgeschaltet. Gleichzeitig wird die Spannkraft in definierter Weise durch Druckbeaufschlagung der oberen Ringkammer 168 der Spann- und Gewichtsausgleichseinrichtung 50 und damit der oberen Wirkfläche 166 des Ringkolbens 164 über das Servo-Druckregelventil V1 soweit erhöht, dass die Linse L für den Randschleifprozess sicher eingespannt ist, der nun mit Hilfe der Bearbeitungseinheiten 58, 60 erfolgen kann.

Es ist ersichtlich, dass während des Glockenspannprozesses infolge der koaxialen Anordnung der an der oberen Zentrierspindelwelle 34 wirkenden Aktuatoren (Hubeinrichtung 44, Drehantrieb 48, Spann- und Gewichtsausgleichseinrichtung 50) keine Querkräfte generiert werden, die die Achsflucht der Zentrierspindelwellen 24, 34 gefährden könnten.

Die eigentliche Randbearbeitung, bei der der Rand der zwischen den Spannglocken 36, 38 gespannten Linse L mittels der drehend angetriebenen Schleifscheiben G an den Schleifspindeln 92, 92' der Bearbeitungseinheiten 58, 60 geschliffen wird, während die Schleifspindeln 92, 92' in den Linearachsen X1, X2 und ggf. Z1, Z2 entsprechend der an der Linse L zu schleifenden Kontur CNClagegeregelt bewegt werden, soll an dieser Stelle nicht näher erläutert werden, da sie dem Fachmann hinlänglich bekannt ist.

Wie weiter oben unter Bezugnahme auf die Fig. 1, 3 und 4 schon erwähnt ist an jeder Bearbeitungseinheit 58, 60 eine Kühlschmierstoff-Versorgungseinrichtung 98, 98' für die jeweilige Schleifscheibe G vorgesehen, die nachfolgend für die in Fig. 1 linke Bearbeitungseinheit 58 anhand der Fig. 13 bis 16 näher erläutert werden soll. Die Kühlschmierstoff-Versorgungseinrichtung 98' an der in Fig. 1 rechten Bearbeitungseinheit 60 ist zur linken Kühlschmierstoff-Versorgungseinrichtung 98 spiegelsymmetrisch ausgebildet und soll daher nicht eigens beschrieben werden.

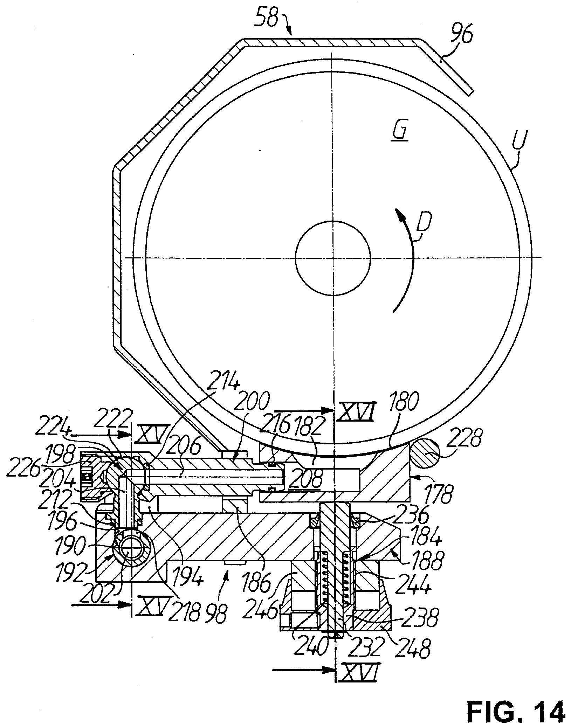

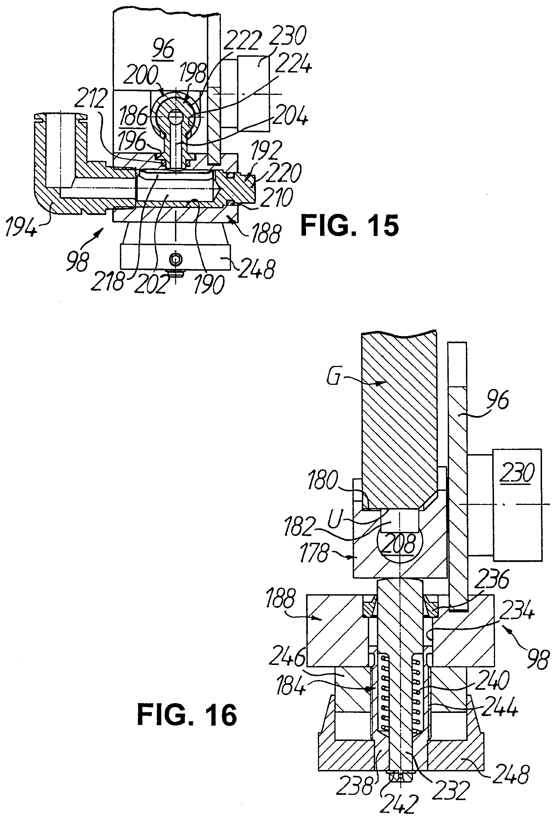

Wie insbesondere die Fig. 14 und 16 zeigen weist die - grundsätzlich auch an anderen Schleifmaschinen einsetzbare - Kühlschmierstoff-Versorgungseinrichtung 98 allgemein einen auf noch zu beschreibende Weise mittelbar an dem Schleifspindelgehäuse 94 gehaltenen, auf einer Umfangsfläche U der Schleifscheibe G sitzenden Zuführschuh 178 auf, der aus einem zerspanbaren Material, vorzugsweise Kunststoff besteht. Der Zuführschuh 178 besitzt eine der Schleifscheibe G zugewandte Sitzfläche 180, die eine zur Umfangsfläche U der Schleifscheibe G im Wesentlichen komplementäre Form aufweist, wozu die Sitzfläche 180 vorzugsweise mittels der Schleifscheibe G als Negativkontur der Umfangsfläche U der Schleifscheibe G am Zuführschuh 178 eingeschliffen ist. Im Wesentlichen mittig ist der Zuführschuh 178 mit einer taschenartigen Vertiefung 182 versehen, in die der Kühlschmierstoff unter Druck zuführbar ist. Ferner ist ein Federmechanismus 184 vorgesehen, mittels dessen der Zuführschuh 178 mit seiner Sitzfläche 180 gegen die Umfangsfläche U der Schleifscheibe G vorgespannt ist, wobei im dargestellten Ausführungsbeispiel die Vorspannkraft des Federmechanismus 184 eingestellt werden kann, wie noch erläutert werden wird.

Gemäß den Fig. 13 und 14 ist die Kühlschmierstoff-Versorgungseinrichtung 98 an dem Spritzschutz 96 gehalten, der seinerseits am Schleifspindelgehäuse 94 befestigt ist. Hierfür weist der Spritzschutz 96 einen Fortsatz 186 auf (siehe Fig. 14), der eine Halterung 188 der Kühlschmierstoff-Versorgungseinrichtung 98 trägt. In Fig. 14 ist die Halterung 188 links mit einer gestuften Durchgangsbohrung 190 zur Aufnahme eines Steuerschiebers 192 versehen, an der gemäß Fig. 15 auch eine L-Steckverschraubung 194 für die Versorgung mit dem Kühlschmierstoff angeschlossen ist. Von oben in den Fig. 14 und 15 mündet eine gestufte Querbohrung 196 in der Durchgangsbohrung 190, in der ein Aufhänger 198 für einen Schuhhalter 200 befestigt ist, der seinerseits den Zuführschuh 178 trägt. Verbindungsbohrungen 202, 204, 206, 208 im Steuerschieber 192, Aufhänger 198, Schuhhalter 200 bzw. Zuführschuh 178 sorgen für eine Fluidverbindung zwischen der L-Steckverschraubung 194 und der Vertiefung 182 im Zuführschuh 178, wobei O-Ringe 210, 212, 214, 216 zur Umgebung hin abdichten. Die Zuflussmenge des Kühlschmierstoffs kann hierbei über eine Steuerschieberöffnung 218 reguliert werden, indem der Steuerschieber 192 in der Durchgangsbohrung 190 der Halterung 188 über eine Handhabe 220 am Steuerschieber 192 verdreht wird.

Gemäß insbesondere Fig. 14 ist der Aufhänger 198 an seinem vom Steuerschieber 192 abgewandten Ende mit einem Kugelkopf 222 versehen, der in einer zugeordneten Aufnahme 224 im Schuhhalter 200 sitzt und dort mittels einer Stellschraube 226 gesichert ist. Der Kugelkopf 222 und die Aufnahme 224 bilden somit ein in Drehrichtung D der Schleifscheibe G gesehen vor dem Zuführschuh 178 liegendes, schleifspindelgehäusefestes Gelenk, an dem der Zuführschuh 178 über den im Wesentlichen rohrförmigen Schuhhalter 200 schwenkbar angelenkt ist, so dass der Zuführschuh 178 im Wesentlichen tangential an die Umfangsfläche U der Schleifscheibe G angelegt werden kann. Ein am Spritzschutz 96 gehaltener Riegel 228, der vermittels einer Handhabe 230 für einen Wechsel des Zuführschuhs 178 entfernt werden kann, bildet hierbei in Drehrichtung D der Schleifscheibe G einen Anschlag für den Zuführschuh 178, der verhindert, dass der Zuführschuh 178 von der Schleifscheibe G mitgerissen wird.

Weitere Details des in Fig. 14 rechts an der Halterung 188 gehaltenen Federmechanismus 184 sind der Fig. 16 zu entnehmen. Der Federmechanismus 184 weist zunächst einen Anschlagstift 232 auf, über den in Richtung auf die Schleifscheibe G eine Kraft auf den Zuführschuh 178 ausgeübt werden kann und der eine gestufte Durchgangsbohrung 234 in der Halterung 188 durchgreift, wobei ein in der Durchgangsbohrung 234 montierter Lippenring 236 im Bereich des über den Zuführschuh 178 in Richtung auf die Schleifscheibe G vorstehenden Endes des Anschlagstifts 232 dafür sorgt, dass der Federmechanismus 184 ansonsten nicht verschmutzt.

Der Anschlagstift 232 ist axial verlagerbar in einer Gewindehülse 238 geführt, wobei radial zwischen dem Anschlagstift 232 und der Gewindehülse 238 eine Schraubendruckfeder 240 vorgesehen ist, die sich sowohl an einer Stufe der Gewindehülse 238 als auch an einer Stufe des Anschlagstifts 232 abstützt, so dass sie den Anschlagstift 232 und die Gewindehülse 238 kräftemäßig auseinander drückt. Im Betriebszustand der Kühlschmierstoff-Versorgungseinrichtung 98 wird der Anschlagstift 232 jedoch durch den Zuführschuh 178 daran gehindert, sich von der Gewindehülse 238 frei wegzubewegen. Wird **z.B.** für Wartungsarbeiten der Zuführschuh 178 entfernt, verhindert ein Sicherungsring 242 am anderen Ende des Anschlagstifts 232 ein Auseinanderfallen des Federmechanismus 184.

Die am Innenumfang der Durchgangsbohrung 234 über einen ringförmigen Steg axial geführte Gewindehülse 238 weist ein Außengewinde 244 auf, mit dem die Gewindehülse 238 in eine Mutter 246 eingeschraubt ist, die ihrerseits fest an der Halterung 188 angebracht ist. Es ist ersichtlich, das durch Verdrehen der Gewindehülse 238 über ein an der Gewindehülse 238 angebrachtes Einstellrad 248 die Vorspannkraft der Schraubendruckfeder 240 definiert eingestellt werden kann.

Im Betrieb der Kühlschmierstoff-Versorgungseinrichtung 98 wird zunächst die Zufuhr des Kühlschmierstoffs eingeschaltet, so dass Letzterer unter Druck über die L-Steckverschraubung 194, den Aufhänger 198 und den Schuhhalter 200 der Vertiefung 182 im Zuführschuh 178 zugeführt wird. Der Zuführschuh 178 wirkt dann quasi als hydrostatisches Gleitlager und hebt von der Umfangsfläche U der Schleifscheibe G leicht ab. Der Lagerspalt dieser "hydrostatischen Lagerung" ist ersichtlich über die Vorspannung der Schraubendruckfeder 240 im Federmechanismus 184 einstellbar. In der praktischen Erprobung dieser Kühlschmierstoff-Versorgungseinrichtung 98 hat sich gezeigt, dass der Kühlschmierstoff die mit hoher Drehzahl drehende Schleifscheibe G über einen Winkel von mehr als 90° nach Verlassen der "Lagertasche" bzw. Vertiefung 182 noch umgibt und erst später bei größeren Winkeln durch die wirkenden Fliehkräfte von der Schleifscheibe G weggeschleudert wird. Dieser nicht erwartete Effekt ermöglicht es, dass der Zuführschuh 178 relativ weit entfernt von der Eingriffsstelle zwischen Schleifscheibe G und Werkstück L positioniert werden kann, was wiederum erhebliche Vorteile bei (u.a.) dem Werkstückhandling mit sich bringt. Auch bereitet dann ein durch eine unrunde Außenkontur des Werkstücks L bedingtes "Wandern" des Eingriffspunkts zwischen Werkstück L und Schleifscheibe G keine Probleme mehr bei der Kühlung bzw. Schmierung.

Ggf. kann z.B. nach dem Glockenspannprozess und vor der eigentlichen Randbearbeitung die Zentrierung der Linse L zwischen den Spannglocken 36, 38 mittels der gemäß Fig. 3 in der Zentriermaschine 10 integrierten Planschlag-Messeinrichtung 100 kontrolliert werden, die in einer Richtung parallel zur Zentrierachse C die axiale Lage eines Stirnflächen-Randbereichs R der zwischen den Spannglocken 36, 38 gespannten Linse L erfassen kann. Diesbezügliche Details sollen abschließend anhand der Fig. 17 bis 19 erläutert werden, in denen hierfür der Spritzschutz 96' und die Kühlschmierstoff-Versorgungseinrichtung 98' weggelassen wurden.

Die Planschlag-Messeinrichtung 100 umfasst einen handelsüblichen taktilen Taster 250, der sich parallel zur Zentrierachse C erstreckt und für eine Positionierung bezüglich des abzutastenden Stirnflächen-Randbereichs R am Werkstück L zusammen mit der Bearbeitungseinheit 60, d.h. vermittels der CNC-Achsen X2, Z2 bewegbar ist, was in Fig. 18 durch die entsprechenden Bewegungspfeile illustriert ist. Vorher kann der Taster 250 gemäß dem entsprechenden Bewegungspfeil in Fig. 17 bezüglich der Bearbeitungseinheit 60 von einer geschützten Parkposition (Fig. 17) hinter der Schleifscheibe G in eine gegenüber der Schleifscheibe G vorstehende Messposition (Fig. 18 & 19) bewegt werden. Hierfür ist ein Pneumatikzylinder 252 mit Endanschlägen von unten an dem Spindelbock 90' der Bearbeitungseinheit 60 angeflanscht. Eine wahlweise aus dem Pneumatikzylinder 252 ausfahrbare Kolbenstange 254 trägt dabei an ihrem freien Ende eine Halterung 256 für den Taster 250. Die Halterung 256 ist im dargestellten Ausführungsbeispiel so ausgebildet, dass sie alternativ oder zusätzlich einen weiteren Taster (nicht dargestellt) aufnehmen kann, und zwar in einer um 90° gegenüber dem Taster 250 verdrehten Lage, womit eine Kontrolle des Radialschlags der zwischen den Spannglocken 36, 38 gespannten Linse L ebenfalls möglich wäre. Der rotative Bewegungspfeil in Fig. 19 deutet schließlich an, dass die Linse L während des eigentlichen Prüfungsvorgangs, bei dem der Taster 250 den Stirnflächen-Randbereich R an der Linse L berührt, um die Zentrierachse C gedreht wird.

Eine Zentriermaschine für insbesondere optische Linsen umfasst zwei Zentrierspindeln, deren drehend antreibbare Zentrierspindelwellen bezüglich einer Zentrierachse axial fluchten und endseitig zur Aufnahme von Spannglocken ausgebildet sind, eine Hubeinrichtung, mittels der eine Zentrierspindelwelle bezüglich der anderen Zentrierspindelwelle zum Ausrichten der Linse zwischen den Spannglocken entlang der Zentrierachse axial zustellbar ist, eine Spanneinrichtung zum Aufbringen einer die ausgerichtete Linse spannenden Spannkraft an einer Zentrierspindelwelle, und wenigstens eine relativ zur Zentrierachse bewegbare Bearbeitungseinheit mit einem Werkzeug für eine Randbearbeitung der gespannten Linse. Um einen optimierten Glockenspannprozess zu ermöglichen, sind die Hubeinrichtung und ein Drehantrieb für die axial zustellbare Zentrierspindelwelle koaxial bezüglich der Zentrierachse angeordnet.

### BEZUGSZEICHENLISTE

- 10: Zentriermaschine
- 12: Maschinenbett
- 14: Aufnahmeraum
- 16: untere Zentrierspindel-Baugruppe
- 18: Portal
- 20: obere Zentrierspindel-Baugruppe
- 22: untere Zentrierspindel
- 24: untere Zentrierspindelwelle
- 26: unteres Zentrierspindelgehäuse
- 28: Umgehäuse
- 30: obere Zentrierspindel
- 32: oberes Zentrierspindelgehäuse
- 34: obere Zentrierspindelwelle
- 35: Lagerring
- 36: Spannglocke
- 38: Spannglocke
- 40: Hydrodehnfutter
- 42: Hydrodehnfutter
- 44: Hubeinrichtung
- 46: Messsystem
- 48: Drehantrieb
- 50: Spann- und Gewichtsausgleichseinrichtung
- 52: Luftlageranordnung
- 54: unterer Luftlagerabschnitt
- 56: oberer Luftlagerabschnitt
- 58: Bearbeitungseinheit
- 60: Bearbeitungseinheit
- 62: Arbeitsraum
- 64, 64': X-Schlitten
- 66, 66': Z-Schlitten
- 68: Führungsschiene
- 70: Führungsschiene
- 72, 72': Führungswagen
- 74: Endanschlag
- 76: Linearmotor
- 78: Stator
- 80: Läufer
- 82, 82': Konsole
- 84, 84': Führungswagen
- 86, 86': Führungsschiene
- 88, 88': Servomotor
- 90, 90': Spindelbock
- 92, 92': Schleifspindel
- 94, 94': Schleifspindelgehäuse
- 96: Spritzschutz
- 98: Kühlschmierstoff-Versorgungseinrichtung
- 100: Planschlag-Messeinrichtung
- 102: Tauchspulenantrieb
- 104: Spule
- 106: Permanentmagnet
- 108: Rotorteil
- 110: Verschraubung
- 112: Tauchspulen-Antriebsgehäuse
- 114: Gehäusedeckel
- 116: Flanschplatte
- 118: Antriebshalter
- 120: obere Ringscheibe
- 122: untere Ringscheibe
- 124: Steg
- 126: Steg
- 128: Axialmesskopf
- 130: Maßband
- 132: Winkelmesskopf
- 134: Messring
- 136: Messkopfadapter
- 138: Messkopfträger
- 140: Messringträger
- 142: oberer Absatz
- 144: Axial/Radial-Luftlageranordnung
- 145: Lagerring
- 146: Axiallagerpad
- 148: Radiallagerbuchse
- 150: Verdrehsicherung
- 152: Lagerflansch
- 154: Stator
- 156: Rotor
- 158: Rotorhülse
- 160: Magnet
- 162: Lagerhülse
- 164: Ringkolben
- 165: Zylinderwandung
- 166: Wirkfläche
- 168: Ringkammer
- 170: Wirkfläche
- 172: Ringkammer
- 174: Verbindungsring
- 176: Durchgangsbohrung
- 178: Zuführschuh
- 180: Sitzfläche
- 182: Vertiefung
- 184: Federmechanismus
- 186: Fortsatz
- 188: Halterung
- 190: Durchgangsbohrung
- 192: Steuerschieber
- 194: L-Steckverschraubung
- 196: Querbohrung
- 198: Aufhänger
- 200: Schuhhalter
- 202: Verbindungsbohrung
- 204: Verbindungsbohrung
- 206: Verbindungsbohrung
- 208: Verbindungsbohrung
- 210: O-Ring
- 212: O-Ring
- 214: O-Ring
- 216: O-Ring
- 218: Steuerschieberöffnung
- 220: Handhabe
- 222: Kugelkopf
- 224: Aufnahme
- 226: Stellschraube
- 228: Riegel
- 230: Handhabe
- 232: Anschlagstift
- 234: Durchgangsbohrung
- 236: Lippenring
- 238: Gewindehülse
- 240: Schraubendruckfeder
- 242: Sicherungsring
- 244: Außengewinde
- 246: Mutter
- 248: Einstellrad
- 250: Taster
- 252: Pneumatikzylinder
- 254: Kolbenstange
- 256: Halterung

- C1, C2: Werkstück-Drehachse (winkellagegeregelt)
- C: Zentrierachse
- D: Drehrichtung der Schleifscheibe
- G: Werkzeug / Schleifscheibe
- L: Werkstück / optische Linse
- Q: Druckluftquelle
- R: Stirnflächen-Randbereich am Werkstück
- S: Stromregler
- U: Umfangsfläche der Schleifscheibe
- V1, V2: Servo-Druckregelventil
- W: Linearachse Spannglocke (lagegeregelt)
- X1, X2: Linearachse Werkzeug (lagegeregelt)
- Z1, Z2: Linearachse Werkzeug (lagegeregelt)

## Patentansprüche

1. Zentriermaschine (10) für Werkstücke (L), namentlich optische Linsen mit gekrümmten optischen Flächen, mit
zwei Zentrierspindeln (22, 30), deren jeweils drehend angetriebene, in Zentrierspindelgehäusen (26, 32) aufgenommene Zentrierspindelwellen (24, 34) bezüglich einer Zentrierachse (C) axial fluchten und an einander zugewandten Spannglockenenden jeweils eine topfförmige Spannglocke (36, 38) aufnehmen,
einer Hubeinrichtung (44), mittels der eine (34) der Zentrierspindelwellen (24, 34) bezüglich der anderen (24) der Zentrierspindelwellen (24, 34) entlang der Zentrierachse (C) feinfühlig axial zustellbar ist, um eines der Werkstücke (L) zwischen den Spannglocken (36, 38) in einem Glockenspannprozess auszurichten, bei dem sich die Spannglocken (36, 38) in einer Antastphase mit leichtem Druck an dem Werkstück (L) anlegen bevor sich das Werkstück (L) in einer Ausrichtphase infolge der Krümmung seiner optischen Flächen selbsttätig in einer Richtung quer zur Zentrierachse (C) verschiebt bis es zwischen den Spannglocken (36, 38) eine Lage eingenommen hat, die den unter den gegebenen geometrischen Verhältnissen minimalen Abstand der Spannglocken (36, 38) ermöglicht,
einer Spanneinrichtung (50) zum Aufbringen einer Spannkraft an einer (34) der Zentrierspindelwellen (24, 34), um das zwischen den Spannglocken (36, 38) ausgerichtete Werkstück (L) in einer sich an die Ausrichtphase anschließenden Spannphase zu spannen, und
wenigstens einer relativ zur Zentrierachse (C) bewegbaren Bearbeitungseinheit (58, 60) mit einem Werkzeug (G) für eine Randbearbeitung des zwischen den Spannglocken (36, 38) gespannten Werkstücks (L),
**dadurch gekennzeichnet, dass** die über die Hubeinrichtung (44) axial zustellbare Zentrierspindelwelle (34) mittels eines Drehantriebs (48) drehend antreibbar ist, der wie die Hubeinrichtung (44) koaxial bezüglich der Zentrierachse (C) angeordnet ist, so dass aufgrund der bezüglich der Zentrierachse (C) zentrierten Anordnung des Drehantriebs (48) an der Zentrierspindelwelle (34) lediglich ein Drehmoment um die Zentrierachse (C) erzeugbar ist, ohne Einbringung einer Querkraft in die Zentrierspindelwelle (34).

2. Zentriermaschine (10) nach Anspruch 1, wobei die Hubeinrichtung (44) und die Spanneinrichtung (50) koaxial bezüglich der Zentrierachse (C) angeordnet sind.

3. Zentriermaschine (10) nach Anspruch 1 oder 2, wobei die Hubeinrichtung (44) einen mit der axial zustellbaren Zentrierspindelwelle (34) wirkverbundenen Tauchspulenantrieb (102) aufweist, der wenigstens eine bezüglich der Zentrierachse (C) koaxiale Spule (104) und wenigstens einen mit der Spule (104) zusammenwirkenden Permanentmagneten (106) umfasst.

4. Zentriermaschine (10) nach Anspruch 3, wobei der Permanentmagnet (106) an einem Rotorteil (108) befestigt ist, das mit der axial zustellbaren Zentrierspindelwelle (34) verbunden ist, während die den Permanentmagneten (106) umgebende Spule (104) in einem maschinenfesten Tauchspulen-Antriebsgehäuse (112) montiert ist.

5. Zentriermaschine (10) nach einem der vorhergehenden Ansprüche, wobei die Spanneinrichtung (50) einen Ringkolben (164) aufweist, der an der axial zustellbaren Zentrierspindelwelle (34) angebracht ist und auf seiner vom Spannglockenende der axial zustellbaren Zentrierspindelwelle (34) abgewandten Seite eine ringförmige Wirkfläche (166) bildet, welche im Zentrierspindelgehäuse (32) eine Ringkammer (168) begrenzt, über die der Ringkolben (164) pneumatisch beaufschlagbar ist, um die Spannkraft zu erzeugen.

6. Zentriermaschine (10) nach Anspruch 5, wobei die Zentrierspindel (30) mit der axial zustellbaren Zentrierspindelwelle (34) oberhalb der anderen Zentrierspindel (22) angeordnet ist und wobei der Ringkolben (164) auf seiner dem Spannglockenende der axial zustellbaren Zentrierspindelwelle (34) zugewandten Seite eine weitere ringförmige Wirkfläche (170) bildet, welche im Zentrierspindelgehäuse (32) eine weitere Ringkammer (172) begrenzt, über die der Ringkolben (164) pneumatisch beaufschlagbar ist, um an der axial zustellbaren Zentrierspindelwelle (34) für einen pneumatischen Gewichtsausgleich zu sorgen.

7. Zentriermaschine (10) nach Anspruch 5 oder 6, wobei der Ringkolben (164) dichtungslos ausgebildet ist.

8. Zentriermaschine (10) nach einem der vorhergehenden Ansprüche, wobei der Drehantrieb (48) als Innenläufer-Torquemotor ausgebildet ist, mit einem im Zentrierspindelgehäuse (32) montierten Stator (154) und einem von dem Stator (154) stets umgebenen, am Außenumfang der axial zustellbaren Zentrierspindelwelle (34) befestigten Rotor (156), der länger ist als der Stator (154) und zusammen mit der axial zustellbaren Zentrierspindelwelle (34) bezüglich des Stators (154) axial verlagerbar ist.

9. Zentriermaschine (10) nach einem der vorhergehenden Ansprüche, wobei die axial zustellbare Zentrierspindelwelle (34) mittels einer Luftlageranordnung (52) axial verlagerbar und drehbar im Zentrierspindelgehäuse (32) gelagert ist.

10. Zentriermaschine (10) nach Anspruch 9, wobei die Luftlageranordnung (52) wenigstens zwei Luftlagerabschnitte (54, 56) umfasst und wobei der Drehantrieb (48) axial zwischen den Luftlagerabschnitten (54, 56) angeordnet ist.

11. Zentriermaschine (10) nach einem der vorhergehenden Ansprüche, ferner umfassend eine Planschlag-Messeinrichtung (100) zur Kontrolle der Zentrierung, mittels der in einer Richtung parallel zur Zentrierachse (C) die axiale Lage eines Stirnflächen-Randbereichs (R) des zwischen den Spannglocken (36, 38) gespannten Werkstücks (L) erfassbar ist.

12. Zentriermaschine (10) nach Anspruch 11, wobei die Planschlag-Messeinrichtung (100) einen taktilen Taster (250) umfasst, der für eine Positionierung bezüglich des abzutastenden Stirnflächen-Randbereichs (R) am Werkstück (L) zusammen mit der Bearbeitungseinheit (60) bewegbar ist.

13. Zentriermaschine (10) nach Anspruch 12, wobei der Taster (250) der Planschlag-Messeinrichtung (100) bezüglich der Bearbeitungseinheit (60) von einer geschützten Parkposition hinter dem Werkzeug (G) in eine gegenüber dem Werkzeug (G) vorstehende Messposition bewegbar ist und umgekehrt.

## Claims

1. Centering machine (10) for workpieces (L), namely optical lenses with curved optical surfaces, with
two centering spindles (22, 30), the centering spindle shafts (24, 34) of which, each driven in rotation and accommodated in centering spindle housings (26, 32), are axially aligned with respect to a centering axis (C) and each accommodate a cup-shaped clamping bell (36, 38) at mutually facing ends,
a stroke device (44), by means of which one (34) of the centering spindle shafts (24, 34) can be adjusted axially in a sensitive manner along the centering axis (C) with respect to the other (24) of the centering spindle shafts (24, 34) in order to align one of the workpieces (L) between the clamping bells (36, 38) in a bell clamping process, in which the clamping bells (36, 38) are applied to the workpiece (L) with slight pressure in a probing phase before the workpiece (L) is automatically displaced in a direction transverse to the centering axis (C) in an alignment phase as a result of the curvature of its optical surfaces until it has assumed a position between the clamping bells (36, 38) which permits the minimum distance between the clamping bells (36, 38) under the given geometric conditions,
a clamping device (50) for applying a clamping force to one (34) of the centering spindle shafts (24, 34) in order to clamp the workpiece (L) aligned between the clamping bells (36, 38) in a clamping phase following the alignment phase, and
at least one processing unit (58, 60) movable relative to the centering axis (C) with a tool (G) for edge processing of the workpiece (L) clamped between the clamping bells (36, 38),
**characterized in that** the centering spindle shaft (34) axially adjustable by way of the stroke device (44) is rotationally drivable by means of a rotary drive (48) arranged as the stroke device (44) to be coaxial with respect to the centering axis (C), so that due to the arrangement, which is centered with respect to the centering axis (C), of the rotary drive (48) merely a torque about the centering axis (C) can be generated, without application of a transverse force to the centering spindle shaft (34).

2. Centering machine (10) according to claim 1, wherein the stroke device (44) and the clamping device (50) are arranged coaxially with respect to the centering axis (C).

3. Centering machine (10) according to claim 1 or 2, wherein the stroke device (44) comprises a plunger coil drive (102) which is operatively connected with the axially adjustable centering spindle shaft (34) and which comprises at least one coil (104) coaxial with respect to the centering axis (C) and at least one permanent magnet (106) co-operating with the coil (104).

4. Centering machine (10) according to claim 3, wherein the permanent magnet (106) is secured to a rotor part (108) connected with the axially adjustable centering spindle shaft (34), whereas the coil (104) surrounding the permanent magnet (106) is mounted in a plunger coil drive housing (112) in stationary position in the machine.

5. Centering machine (10) according to any one of the preceding claims, wherein the clamping device (50) comprises an annular piston (164), which is mounted on the axially adjustable centering spindle shaft (34) and on the side thereof remote from the clamping bell end of the axially adjustable centering spindle shaft (34) defines an annular effective surface (166) which bounds in the centering spindle housing (32) an annular chamber (168) by way of which the annular piston (164) can be acted on pneumatically so as to generate the clamping force.

6. Centering machine (10) according to claim 5, wherein the centering spindle (30) with the axially adjustable centering spindle shaft (34) is arranged above the other centering spindle (22), and wherein the annular piston (164) defines on the side thereof facing the clamping bell end of the axially adjustable centering spindle shaft (34) a further annular effective surface (170) which bounds in the centering spindle housing (32) a further annular chamber (172) by way of which the annular piston (164) can be acted on pneumatically in order to ensure pneumatic counterbalancing at the axially adjustable centering spindle shaft (34).

7. Centering machine (10) according to claim 5 or 6, wherein the annular piston (164) is constructed to be unsealed.

8. Centering machine (10) according to any one of the preceding claims, wherein the rotary drive (48) is constructed as an internal rotor torque motor with a stator (154) mounted in the centering spindle housing (32) and a rotor (156) constantly surrounded by the stator (154) and secured to the outer circumference of the axially adjustable centering spindle shaft (34), the rotor being longer than the stator (154) and axially displaceable together with the axially adjustable centering spindle shaft (34) relative to the stator (154).

9. Centering machine (10) according to any one of the preceding claims, wherein the axially adjustable centering spindle shaft (34) is axially displaceable and rotatably mounted in the centering spindle housing (32) by means of an air bearing arrangement (52).

10. Centering machine (10) according to claim 9, wherein the air bearing arrangement (52) has at least two air bearing sections (54, 56), and wherein the rotary drive (48) is arranged axially between the air bearing sections (54, 56).

11. Centering machine (10) according to any one of the preceding claims, further comprising an axial run-out measuring device (100) for checking the centering, by means of which the axial position of an end face edge region (R) of the workpiece (L) clamped between clamping bells (36, 38) is detectable in a direction parallel to the centering axis (C).

12. Centering machine (10) according to claim 11, wherein the axial run-out measuring device (100) comprises a contact caliper (250) which, for positioning with respect to the end face edge region (R) to be scanned at the workpiece (L), is movable together with the processing unit (60).

13. Centering machine (10) according to claim 12, wherein the caliper (250) of the axial run-out measuring device (100) is movable relative to the processing unit (60) from a protected park position behind the workpiece (G) to a measuring position protruding relative to the workpiece (G) and conversely.

## Revendications

1. Machine de centrage (10) pour pièces (L), à savoir lentilles optiques à surfaces optiques courbes, avec
deux broches de centrage (22, 30), dont des arbres de broche de centrage (24, 34) entraînés en rotation, reçus dans des boîtiers de broche de centrage (26, 32), sont alignés axialement par rapport à un axe de centrage (C) et reçoivent chacun une cloche de serrage en forme de coupelle (36, 38) au niveau d'extrémités de cloche de serrage se faisant face,
un dispositif de levage (44), au moyen duquel l'un (34) des arbres de broche de centrage (24, 34) peut être réglé axialement avec précision le long de l'axe de centrage (C) par rapport à l'autre (24) des arbres de broche de centrage (24, 34) pour aligner l'une des pièces (L) entre les cloches de serrage (36, 38) dans un processus de serrage en cloches, dans lequel les cloches de serrage (36, 38) reposent avec une légère pression sur la pièce (L) dans une phase de palpage avant que la pièce (L), dans une phase d'alignement du fait de la courbure de ses surfaces optiques, se déplace automatiquement dans une direction transversale à l'axe de centrage (C) jusqu'à ce qu'elle ait occupé une position entre les cloches de serrage (36, 38) qui permet la distance minimale entre les cloches de serrage (36, 38) dans les conditions géométriques données,
un dispositif de serrage (50) pour appliquer une force de serrage sur l'un (34) des arbres de broche de centrage (24, 34) afin de serrer la pièce (L) alignée entre les cloches de serrage (36, 38) dans une phase de serrage suivant la phase d'alignement, et
au moins une unité de traitement (58, 60) mobile par rapport à l'axe de centrage (C) avec un outil (G) pour un traitement du bord de la pièce (L) serrée entre les cloches de serrage (36, 38),
**caractérisée en ce que**
l'arbre de broche de centrage (34), réglable axialement via le dispositif de levage (44), peut être entraîné en rotation au moyen d'un entraînement en rotation (48), qui, comme le dispositif de levage (44), est disposé coaxialement par rapport à l'axe de centrage (C), de sorte que, du fait de la disposition centrée de l'entraînement rotatif (48) sur l'arbre de broche de centrage (34) par rapport à l'axe de centrage (C), seul un couple peut être généré autour de l'axe de centrage (C), sans introduire de force transversale dans l'arbre de broche de centrage (34).

2. machine de centrage (10) selon la revendication 1, dans laquelle le dispositif de levage (44) et le dispositif de serrage (50) sont disposés coaxialement par rapport à l'axe de centrage (C).

3. Machine de centrage (10) selon la revendication 1 ou 2, dans laquelle le dispositif de levage (44) présente un entraînement à bobine mobile (102) relié fonctionnellement à l'arbre de broche de centrage (34) réglable axialement, qui comprend moins une bobine (104) coaxiale par rapport à l'axe de centrage (C) et au moins un aimant permanent (106) coopérant avec la bobine (104).

4. Machine de centrage (10) selon la revendication 3, dans laquelle l'aimant permanent (106) est fixé à une partie de rotor (108) qui est reliée à l'arbre de broche de centrage (34) réglable axialement, tandis que la bobine (104) entourant l'aimant permanent (106) est montée dans un boîtier d'entraînement à bobine mobile fixe par rapport à la machine.

5. Machine de centrage (10) selon l'une des revendications précédentes, dans laquelle le dispositif de serrage (50) présente un piston annulaire (164) qui est disposé sur l'arbre de broche de centrage (34) réglable axialement et forme sur son côté opposé à l'extrémité cloche de serrage de l'arbre de broche de centrage (34) réglable axialement une surface active annulaire (166), qui délimite dans le boîtier de broche de centrage (32) une chambre annulaire (168) par le biais de laquelle le piston annulaire (164) peut être chargé pneumatiquement afin de générer la force de serrage.

6. Machine de centrage (10) selon la revendication 5, dans laquelle la broche de centrage (30) avec l'arbre de broche de centrage (34) réglable axialement est disposée au-dessus de l'autre broche de centrage (22) et dans laquelle le piston annulaire (164) forme, sur son côté tourné vers l'extrémité cloche de serrage de l'arbre de broche de centrage (34) réglable axialement, une autre surface active annulaire (170) qui, dans le boîtier de broche de centrage (32), délimite une autre chambre annulaire (172) par l'intermédiaire de laquelle le piston annulaire (164) peut être actionné pneumatiquement afin d'assurer une compensation pneumatique du poids sur l'arbre de broche de centrage (34) réglable axialement.

7. Machine de centrage (10) selon la revendication 5 ou 6, dans laquelle le piston annulaire (164) est réalisé sans étanchéité.

8. Machine de centrage (10) selon l'une des revendications précédentes, dans laquelle l'entraînement en rotation (48) est conçu comme un moteur couple à rotor interne, avec un stator (154) monté dans le boîtier de broche de centrage (32) et un rotor (156) toujours entouré par le stator (154), fixé au niveau de la circonférence extérieure de l'arbre de broche de centrage (34) réglable axialement, qui est plus long que le stator (154) et peut être déplacé axialement par rapport au stator (154) conjointement avec l'arbre de broche de centrage (34) réglable axialement.

9. Machine de centrage (10) selon l'une des revendications précédentes, dans laquelle l'arbre de broche de centrage (34) réglable axialement peut être déplacé axialement et monté rotatif dans le boîtier de broche de centrage (32) au moyen d'un agencement de palier à air (52).

10. Machine de centrage (10) selon la revendication 9, dans laquelle l'agencement de palier à air (52) comprend au moins deux sections de palier à air (54, 56) et dans laquelle l'entraînement en rotation (48) est disposé axialement entre les sections de palier à air (54, 56).

11. Machine de centrage (10) selon l'une des revendications précédentes, comprenant en outre un dispositif de mesure de battement axial (100) pour contrôler le centrage, au moyen duquel dans une direction parallèle à l'axe de centrage (C) la position axiale d'un domaine de bord de surface frontale (R) de la pièce (L) serrée entre les cloches de serrage (36, 38) peut être détectée.

12. Machine de centrage (10) selon la revendication 11, dans laquelle le dispositif de mesure de battement axial (100) comprend un palpeur tactile (250) qui est mobile conjointement avec l'unité de traitement (60) pour un positionnement par rapport au domaine de bord de surface frontale (R) à palper sur la pièce (L).

13. Machine de centrage (10) selon la revendication 12, dans laquelle le palpeur (250) du dispositif de mesure de battement axial (100) est mobile par rapport à l'unité de traitement (60) d'une position de stationnement protégée derrière l'outil (G) à une position de mesure disposée devant par rapport à l'outil (G) et inversement.
